# EUROPEAN PATENT APPLICATION

(11) **EP 3 633 624 A1**
(43) Date of publication of application: **08.04.2020**
(21) Application number: 18810322.0
(22) Date of filing: 25.04.2018
(51) Int. Cl.: G06T 15/04, G06T 19/00, H04N 5/232

(54) **IMAGE PROCESSING DEVICE, IMAGE PROCESSING SYSTEM, IMAGE PROCESSING METHOD, AND PROGRAM**

(30) Priority: 31.05.2017 JP 2017107471
(71) Applicant: Sony Corporation, Tokyo 108-0075 (JP)
(72) Inventor: OKADA, Ryohei, Tokyo 108-0075 (JP)
(74) Representative: D Young & Co LLP
(86) International application number: PCT/JP2018/016827
(87) International publication number: WO 2018/221092

(57) **Abstract**

An apparatus and a method are provided which allow 3D image generation based on an input image on the real-time basis. Processing for image frames of an input image is executed to generate a three-dimensional image. A template database that is correspondence data between attribute information of an imaging object of an input image and materials that are rendering elements of a three-dimensional image is referred to to select a material according to an imaging object attribute to generate a three-dimensional image. The template database has recorded therein materials of component units of the face of a person, and an image processing section applies a mask image of a component unit of the face and acquires a material for each component from the template database to execute material setting in a component unit of the face.

## Description

### [Technical Field]

The present disclosure relates to an image processing apparatus, an image processing system, and an image processing method as well as a program. More particularly, the present disclosure relates to an image processing apparatus, an image processing system, and an image processing method as well as a program that execute rendering of a three-dimensional (3D) image.

### [Background Art]

In recent years, a three-dimensional (3D) image generation technology that uses a computer graphics (CG) technology is utilized in various fields such as movie and game fields.

For example, PTL 1 (Japanese Patent Laid-Open No. 2012-185624) discloses a three-dimensional face model data generation apparatus for drawing the face of a person in high quality at a low calculation cost.

This PTL 1 discloses an apparatus that performs processing for cutting out, after it acquires facial expression data of the face, only portions of the face of the person and then pasting a texture corresponding to the shape of the face deformed in response to the facial expression to generate and display a three-dimensional face image that is high in quality and is not uncomfortable.

Further, PTL 2 (Japanese Patent Laid-Open No. 2010-113548) describes a polygon three-dimensional graphics drawing apparatus that adopts a texture mapping technique.

PTL 2 discloses an apparatus that makes it possible, by providing a coefficient relating to reflection of a body to texture data, to express a plurality of different reflections in one polygon thereby to allow more advanced quality feeling expression of the body with a smaller amount of model data.

### [Citation List]

### [Patent Literature]

[PTL 1] Japanese Patent Laid-Open No. 2012-185624
[PTL 2] Japanese Patent Laid-Open No. 2010-113548

### [Summary]

### [Technical Problems]

However, although the technology disclosed in PTL 1 discloses a process for pasting a face texture cut out from a video of a person to a face model to perform rendering, since it is not taken it into consideration that a reflection characteristic is changed for each of portions having different characteristics from each other or the like, in the case where a 3D image is displayed under a condition different from an illumination environment at the time of imaging, the 3D image sometimes becomes unnatural.

On the other hand, according to the technology disclosed in PTL 2, material parameters indicative of a material type of a body such as a reflection coefficient are kept by texture data, and a fine quality feeling expression is implemented by performing rendering making the most of the material parameters.

However, this configuration disclosed in PTL 2 is a configuration that records one material parameter in a corresponding relation to texture data in advance and therefore has a problem that only one unique quality feeling can be expressed for each texture. In particular, the configuration disclosed in PTL 2 has such a problem that an optimum quality feeling expression, for example, according to a light source direction cannot be achieved.

The present disclosure has been made taking, for example, the problem described above into consideration and provides an image processing apparatus, an image processing system, and an image processing method as well as a program that implement a displaying process of a three-dimensional (3D) image that is more natural and has reality.

In one working example of the present disclosure, a captured image of a person who is to become a displaying target is inputted and attributes of the person such as the sex and the age are analyzed from the inputted captured image (texture), and then feature amount detection of a face organ, a skin region, a body portion, hair, clothes and so forth is performed. Furthermore, a texture map for material setting suitable for an imaging object and a mask image that designates an application range of the material are automatically generated from a template database prepared in advance to automatically set an appropriate material on the real-time basis to arbitrary person 3D image model data thereby to allow implementation of rendering having reality.

Further, according to the working example of the present disclosure, in a displaying process of a three-dimensional (3D) image of a person, customize information regarding what CG effect is to be applied is acquired from a user in advance, and from an inputted texture (captured image), feature amount detection of a face organ, a skin region, a body portion, hair, clothes and so forth is performed. Thereafter, a texture map for material setting and a mask image that designates an application range of a material are automatically generated from the template database associated with user selection to automatically set an appropriate material on the real-time basis to arbitrary person 3D image model data thereby to implement rendering favorable to the user.

### [Solution to Problems]

A first aspect of the present disclosure resides in
an image processing apparatus including:
an image processing section configured to execute a three-dimensional image generation process based on an input image, in which
the image processing section refers to a template database that includes correspondence data between attribute information of an imaging object of the input image and a material that is a rendering element of a three-dimensional image to select a material according to an imaging object attribute and executes a generation process of a three-dimensional image.

Further, a second aspect of the present disclosure resides in
an image processing system including:
a transmission apparatus configured to transmit an image; and
a reception apparatus configured to execute processing for an input image from the transmission apparatus to generate a three-dimensional image and display the three-dimensional image on a display section, in which
the image processing section of the reception apparatus refers to a template database that includes correspondence data between attribute information of an imaging object of the input image and a material that is a rendering element of a three-dimensional image to select a material according to an imaging object attribute and executes a generation process of the three-dimensional image.

Further, a third aspect of the present disclosure resides in
an image processing method executed by an image processing apparatus, in which
the image processing apparatus includes an image processing section configured to execute a three-dimensional image generation process based on an input image, and
the image processing section refers to a template database that includes correspondence data between attribute information of an imaging object of the input image and a material that is a rendering element of a three-dimensional image to select a material according to an imaging object attribute and executes a generation process of a three-dimensional image.

Furthermore, a fourth aspect of the present disclosure resides in
a program for causing an image processing apparatus to execute image processing, in which
the image processing apparatus includes an image processing section configured to execute a three-dimensional image generation process based on an input image, and
the program causes the image processing section to refer to a template database that includes correspondence data between attribute information of an imaging object of the input image and a material that is a rendering element of a three-dimensional image to select a material according to an imaging object attribute and execute a generation process of a three-dimensional image.

It is to be noted that the program of the present disclosure is a program that can be provided, for example, by a storage medium or a communication medium, which provides the program in a computer-readable form, to an image processing apparatus or a computer system that can execute various program codes. By providing such a program as just described in a computer-readable form, processing according to the program is implemented on the image processing apparatus or the computer system.

Further objects, features and advantages of the present disclosure will become clear from more detailed description based on a working example of the present disclosure hereinafter described and the accompanying drawings. It is to be noted that a system in the present specification is a logical set composition of a plurality of apparatuses and is not limited to a configuration in which component apparatuses are in the same housing.

### [Advantageous Effect of Invention]

According to the configuration of the working example of the present disclosure, an apparatus and a method are provided which allow 3D image generation based on an input image on the real-time basis.

In particular, for example, processing for image frames of an input image is executed to generate a three-dimensional image. The template database that is correspondence data between attribute information of an imaging object of an input image and materials that are rendering elements of a three-dimensional image is referred to to select a material according to an imaging object attribute to generate a three-dimensional image. The template database has recorded therein materials of component units of the face of a person, and the image processing section applies a mask image of a component unit of the face and acquires a material for each component from the template database to execute material setting in a component unit of the face.

By the present configuration, an apparatus and a method are provided which allow 3D image generation based on an input image on the real-time basis.

It is to be noted that the effects described in the present specification are merely exemplary and the effects of the present disclosure are not limited to them. Further, the present disclosure may demonstrate an additional effect.

### [Brief Description of Drawings]

[FIG. 1]

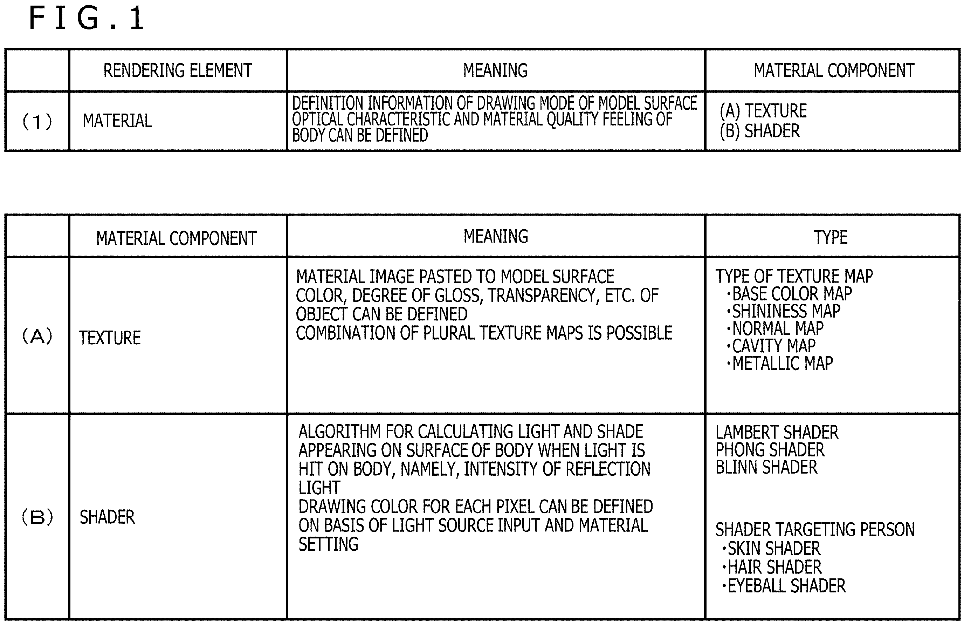

   FIG. 1 is a view illustrating a rendering process of a 3D image and a material.
[FIG. 2]

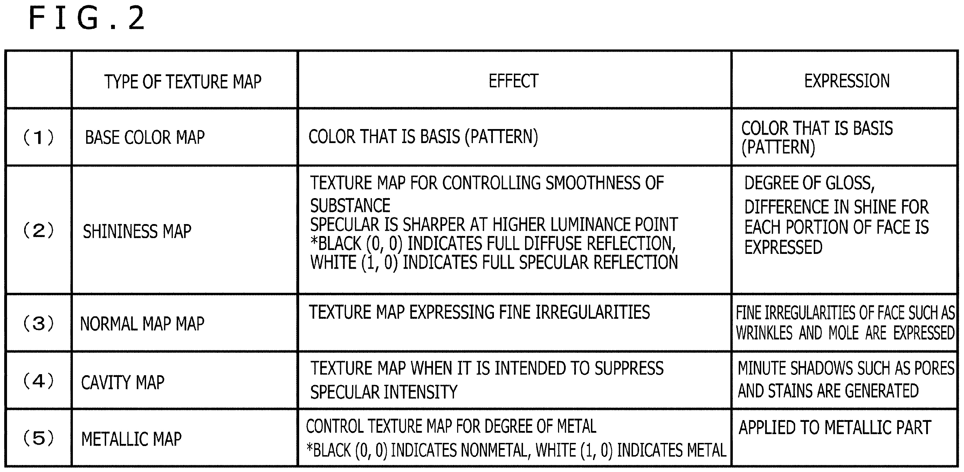

   FIG. 2 is a view illustrating a texture map.
[FIG. 3]

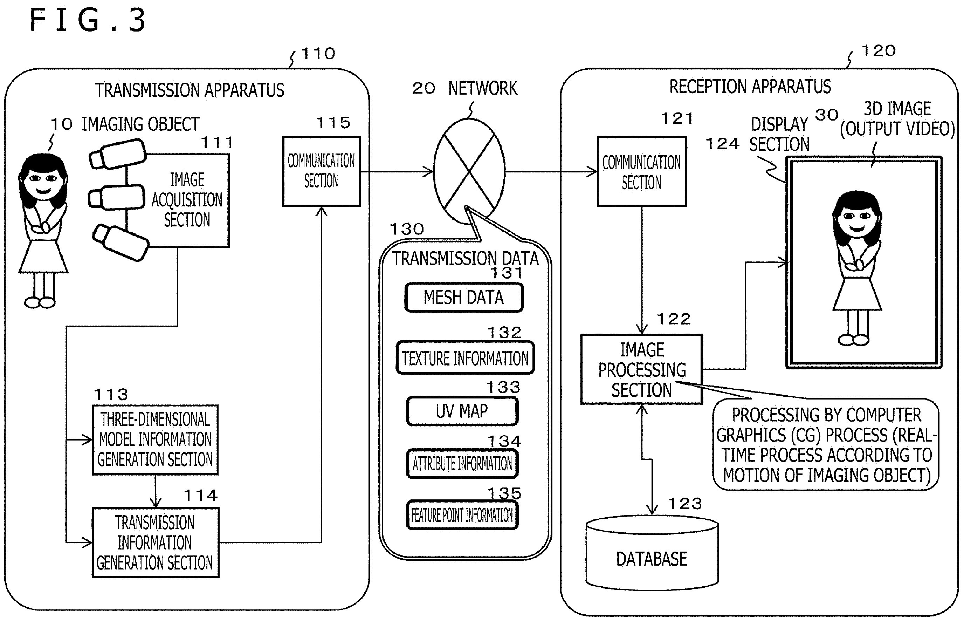

   FIG. 3 is a view illustrating an example of a configuration and an example of processing of an image processing system of the present disclosure.
[FIG. 4]

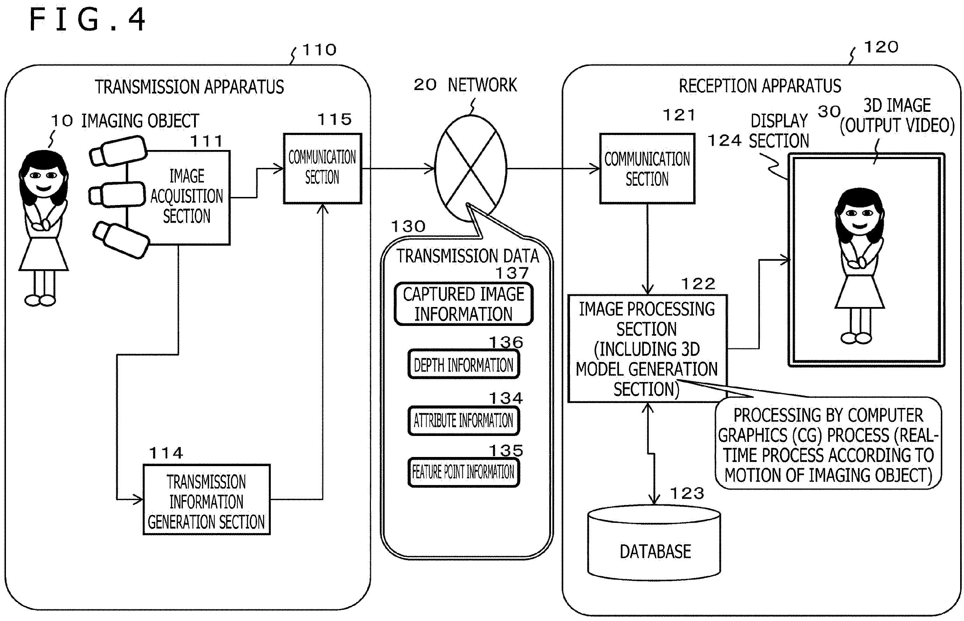

   FIG. 4 is a view illustrating an example of a configuration and an example of processing of another image processing system of the present disclosure.
[FIG. 5]

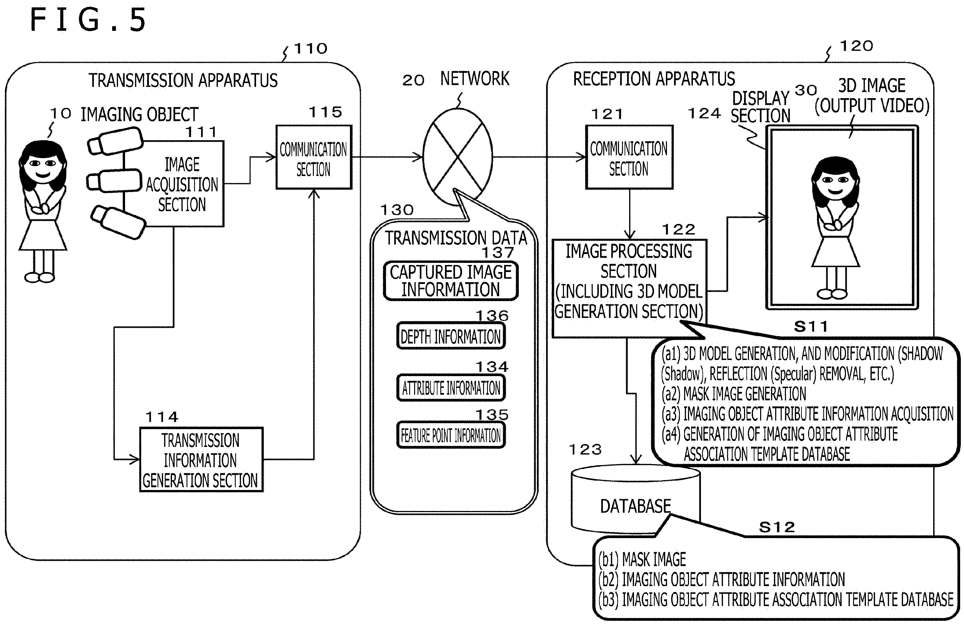

   FIG. 5 is a view illustrating an example of a configuration and an example of processing of a further image processing system of the present disclosure.
[FIG. 6]

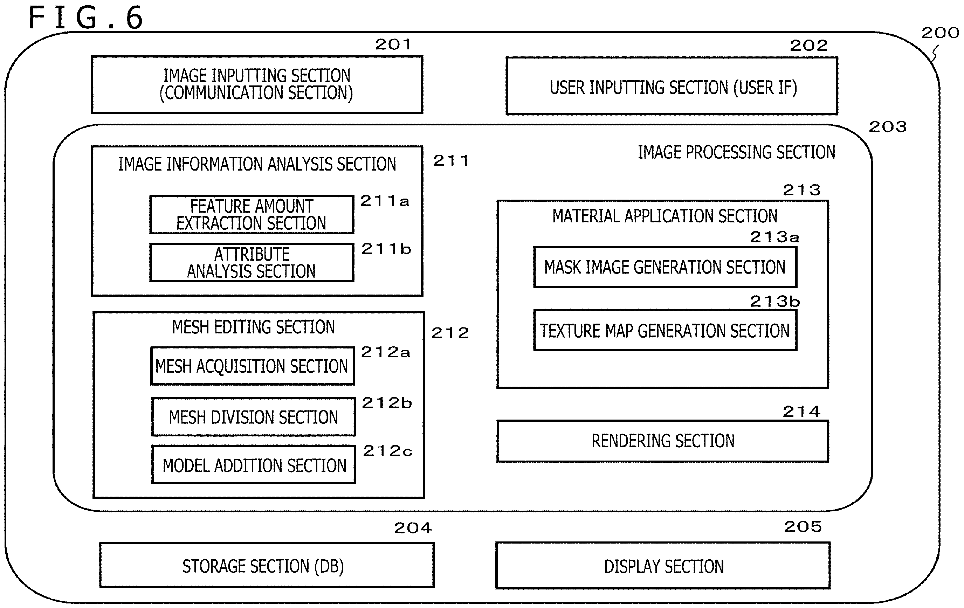

   FIG. 6 is a view illustrating an example of a configuration of an image processing apparatus.
[FIG. 7]

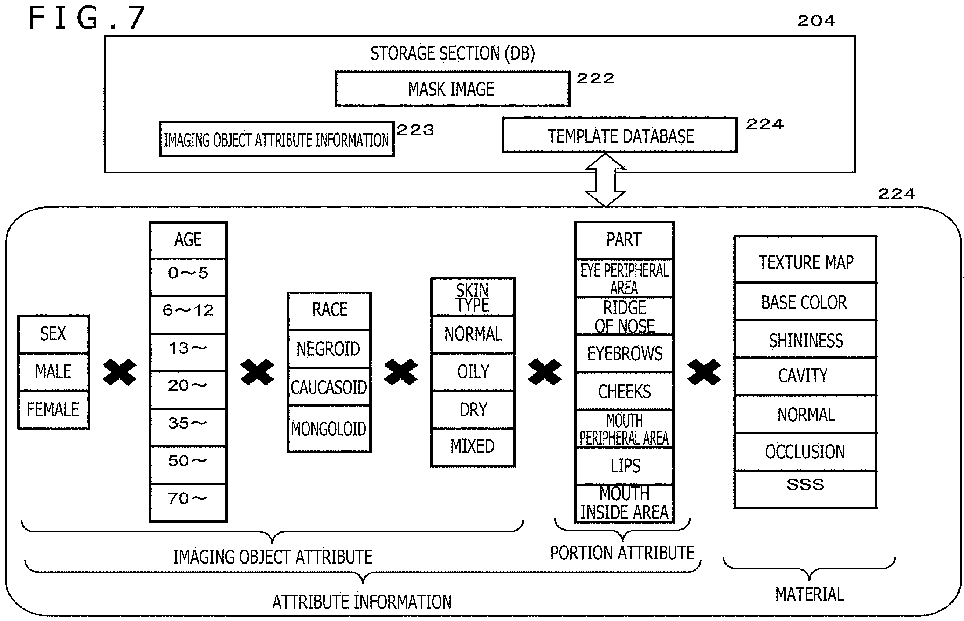

   FIG. 7 is a view illustrating an example of data and a template database stored in a storage section.
[FIG. 8]

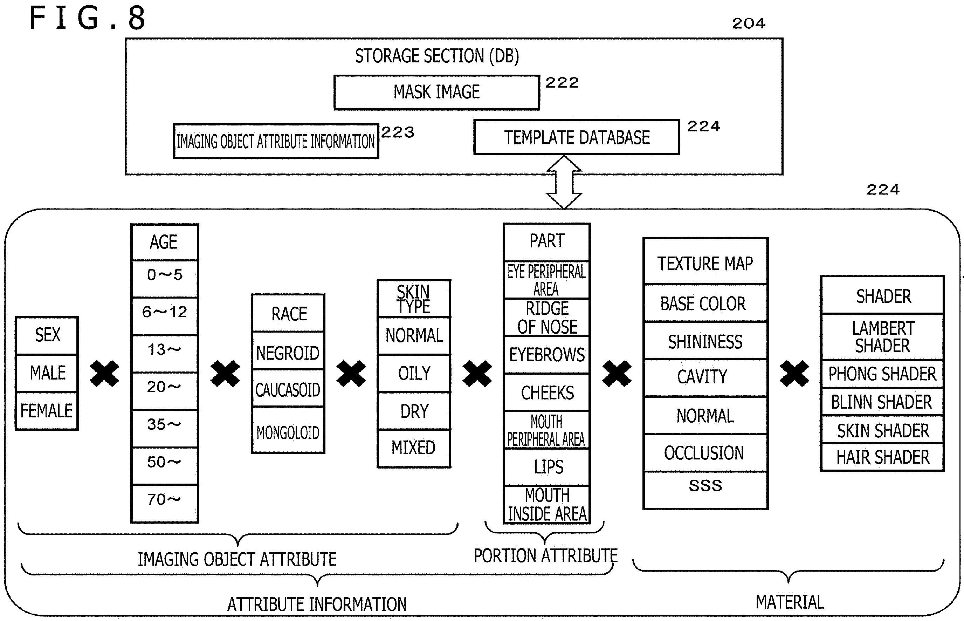

   FIG. 8 is a view illustrating another example of the data and the template database stored in the storage section.
[FIG. 9]

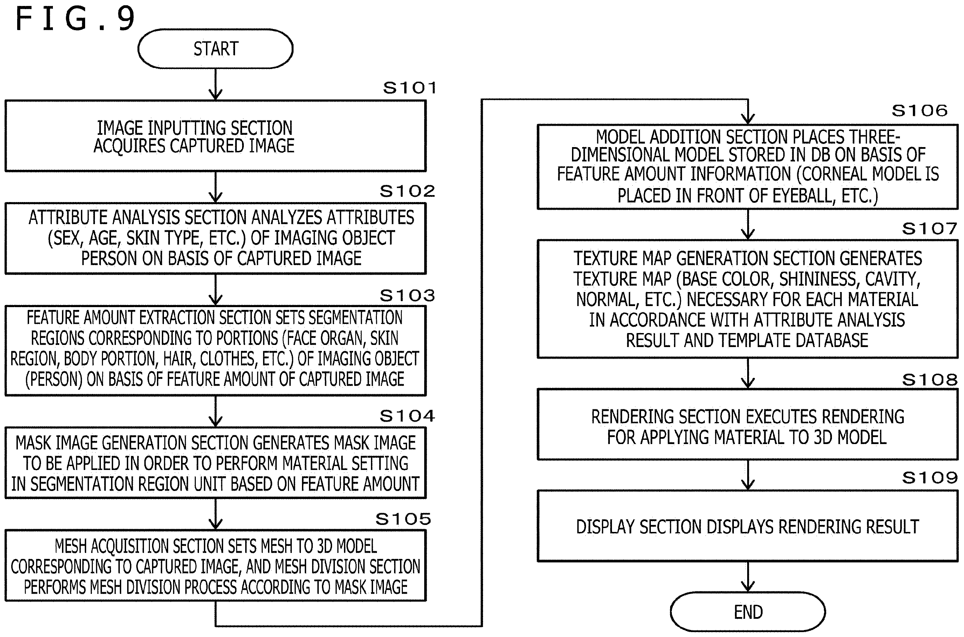

   FIG. 9 is a flow chart illustrating a processing sequence executed by the image processing apparatus of the present disclosure.
[FIG. 10]

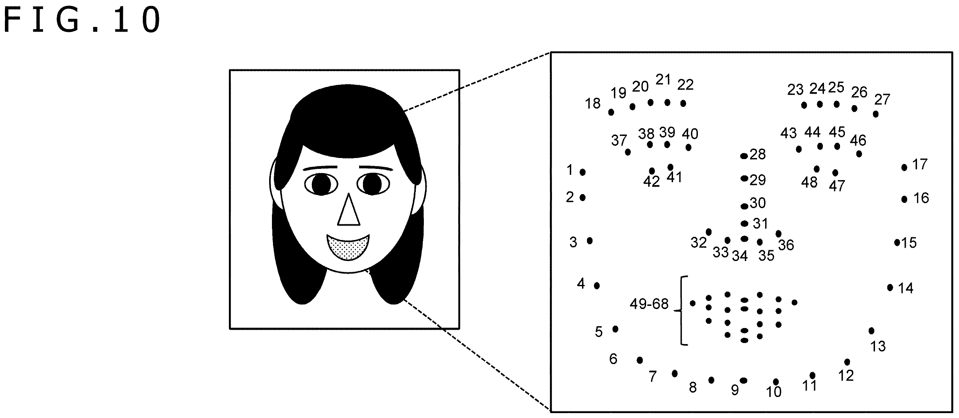

   FIG. 10 is a view illustrating a feature point.
[FIG. 11]

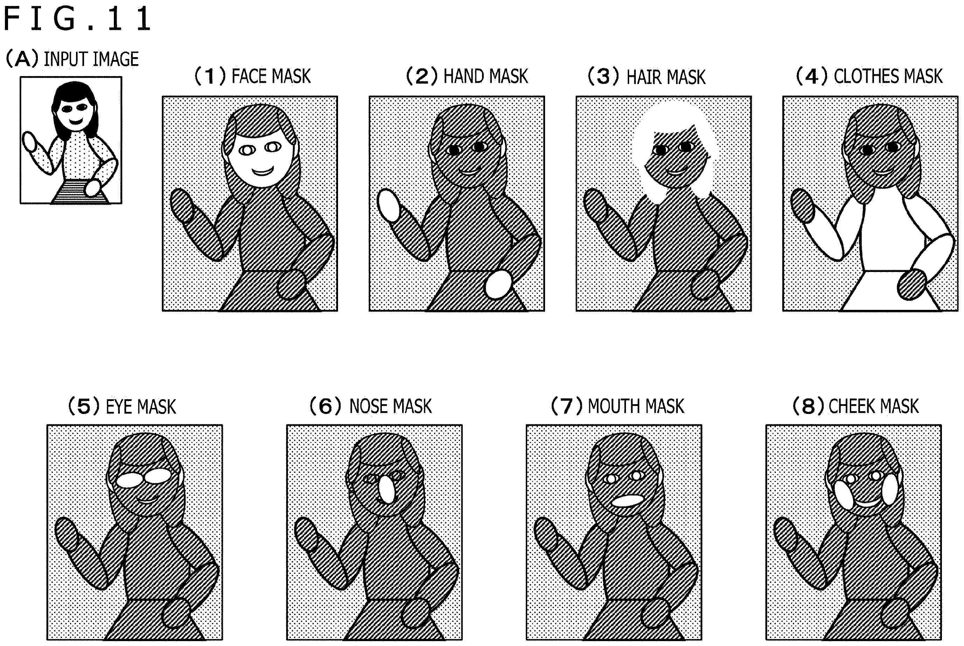

   FIG. 11 is a view illustrating an example of a mask image.
[FIG. 12]

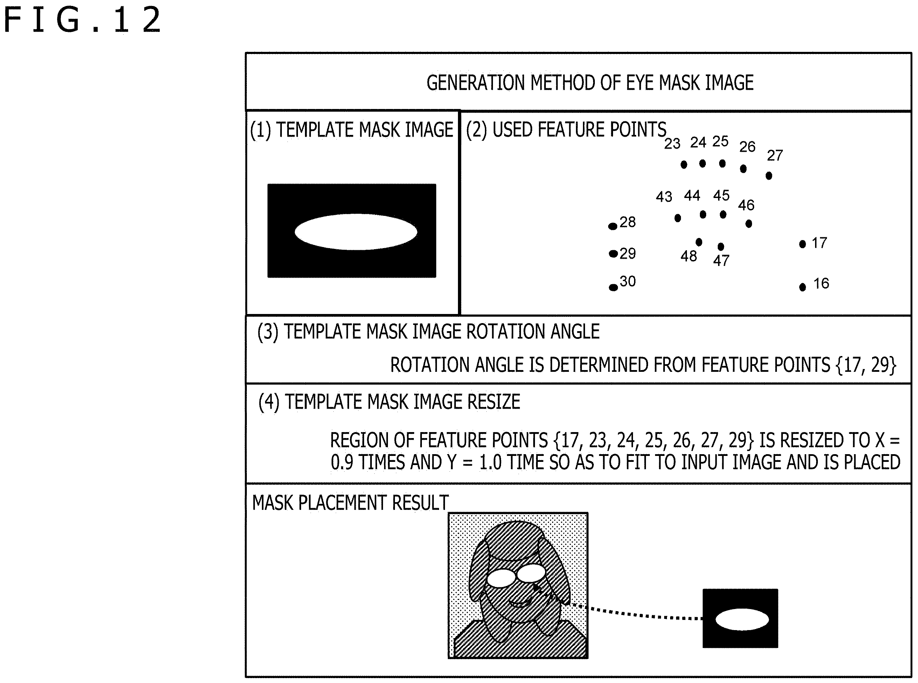

   FIG. 12 is a view illustrating an example of a generation process of a mask image.
[FIG. 13]

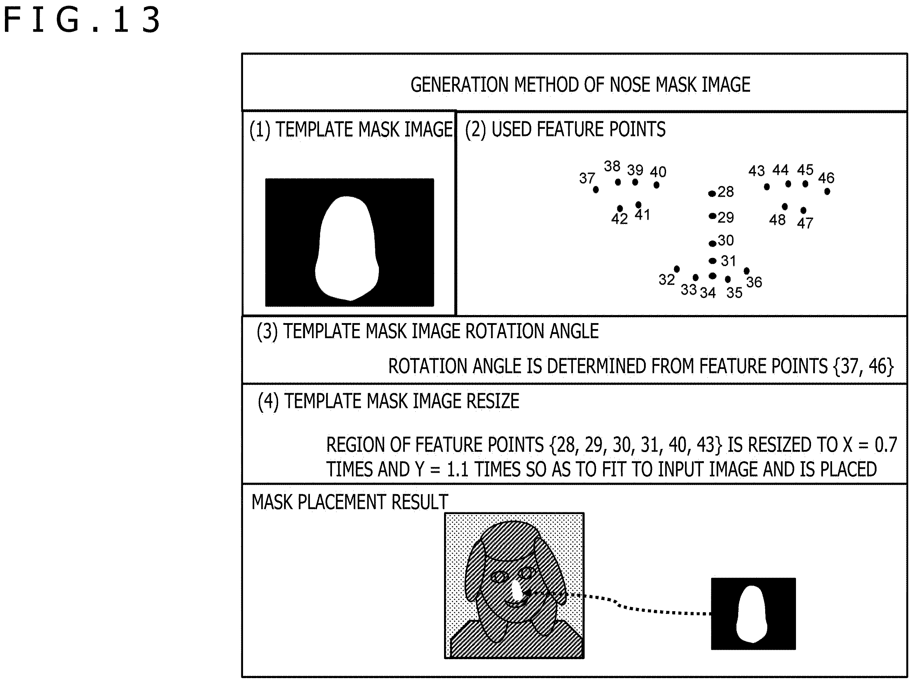

   FIG. 13 is a view illustrating another example of a generation process of a mask image.
[FIG. 14]

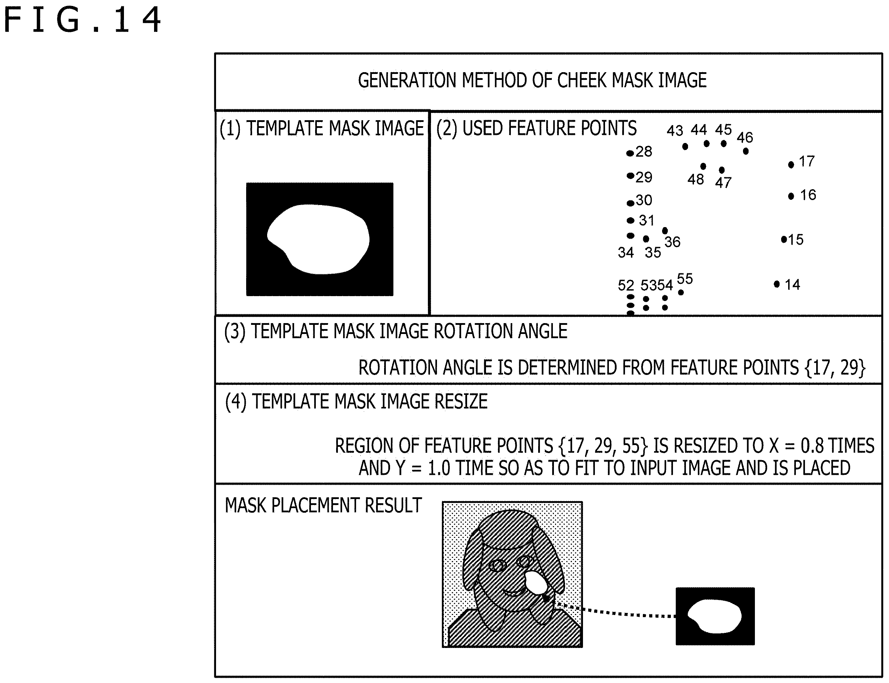

   FIG. 14 is a view illustrating a further example of a generation process of a mask image.
[FIG. 15]

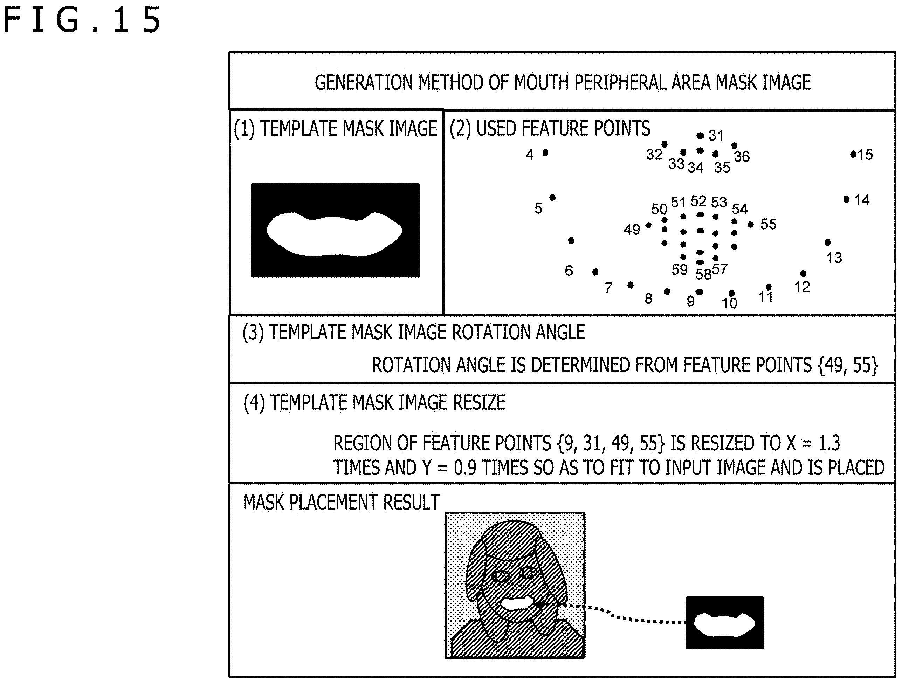

   FIG. 15 is a view illustrating a still further example of a generation process of a mask image.
[FIG. 16]

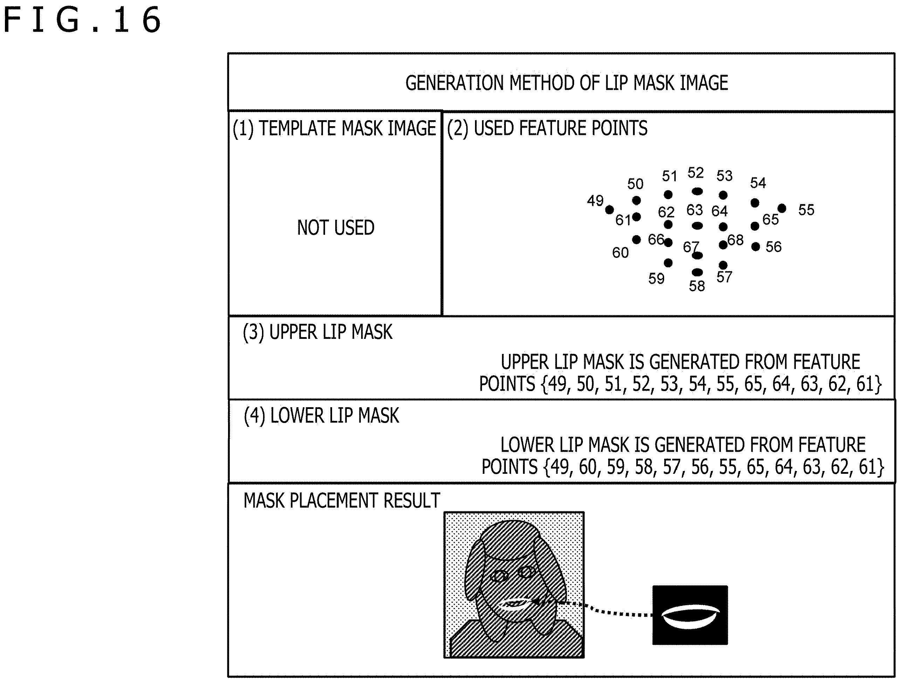

   FIG. 16 is a view illustrating a yet further example of a generation process of a mask image.
[FIG. 17]

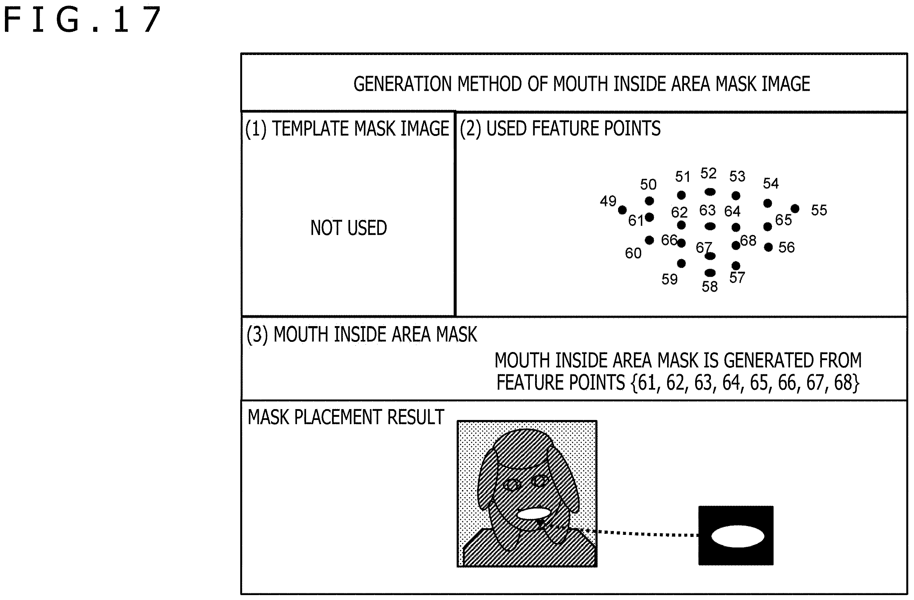

   FIG. 17 is a view illustrating a yet further example of a generation process of a mask image.
[FIG. 18]

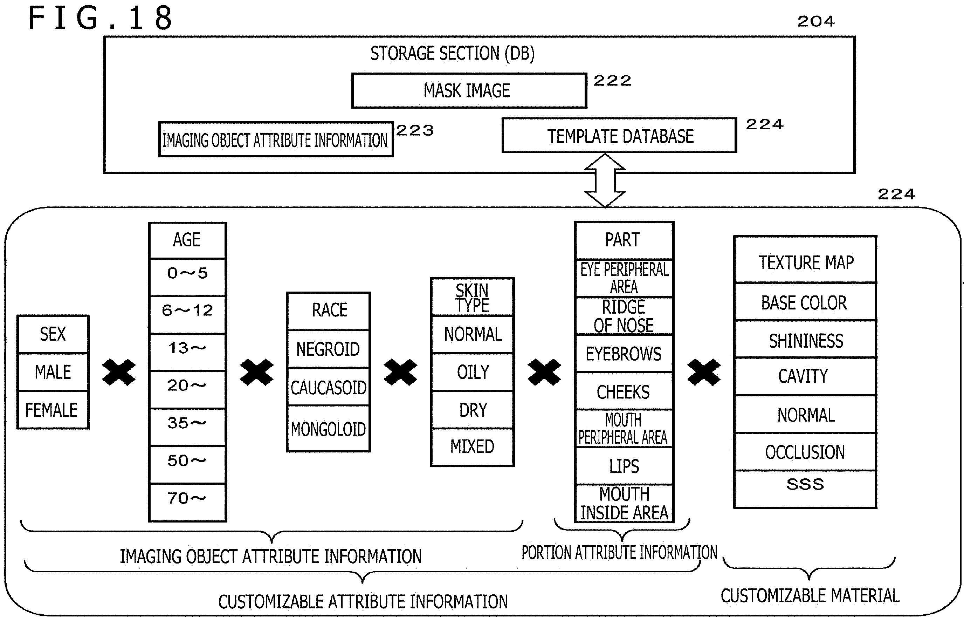

   FIG. 18 is a view illustrating a further example of the data and the template database stored in the storage section.
[FIG. 19]

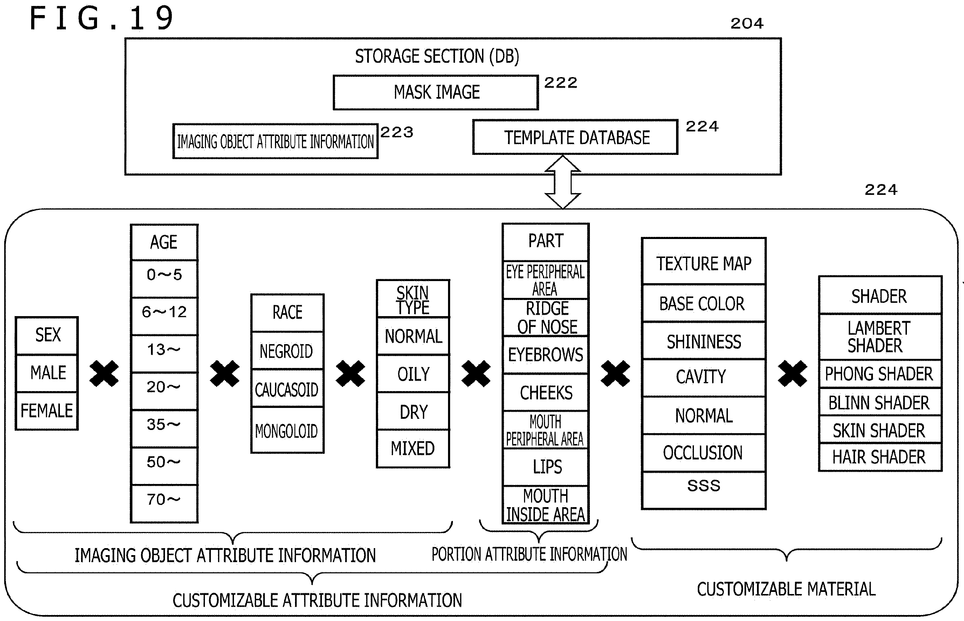

   FIG. 19 is a view illustrating a still further example of the data and the template database stored in the storage section.
[FIG. 20]

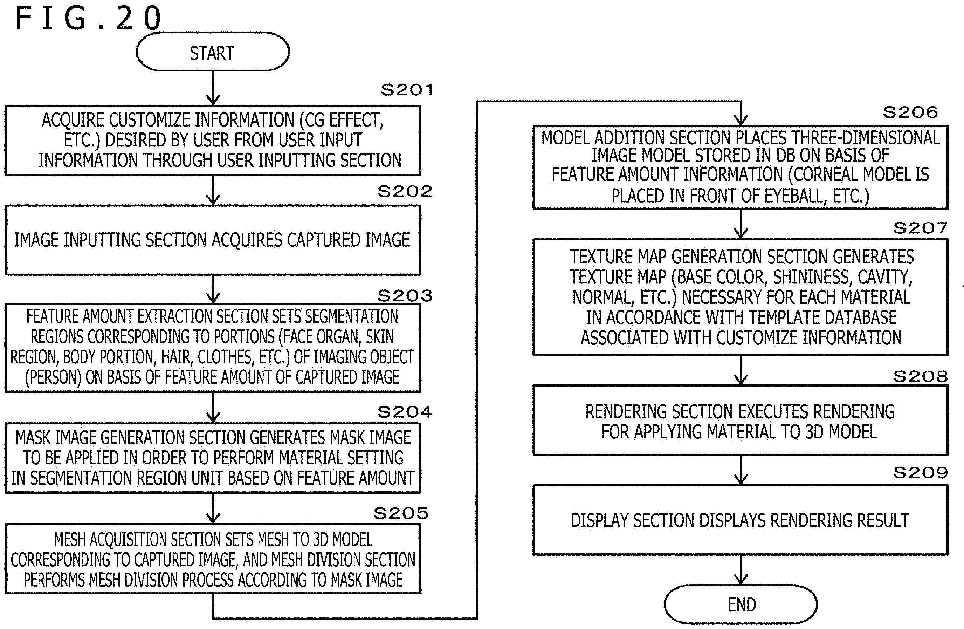

   FIG. 20 is a flow chart illustrating another processing sequence executed by the image processing apparatus of the present disclosure.
[FIG. 21]

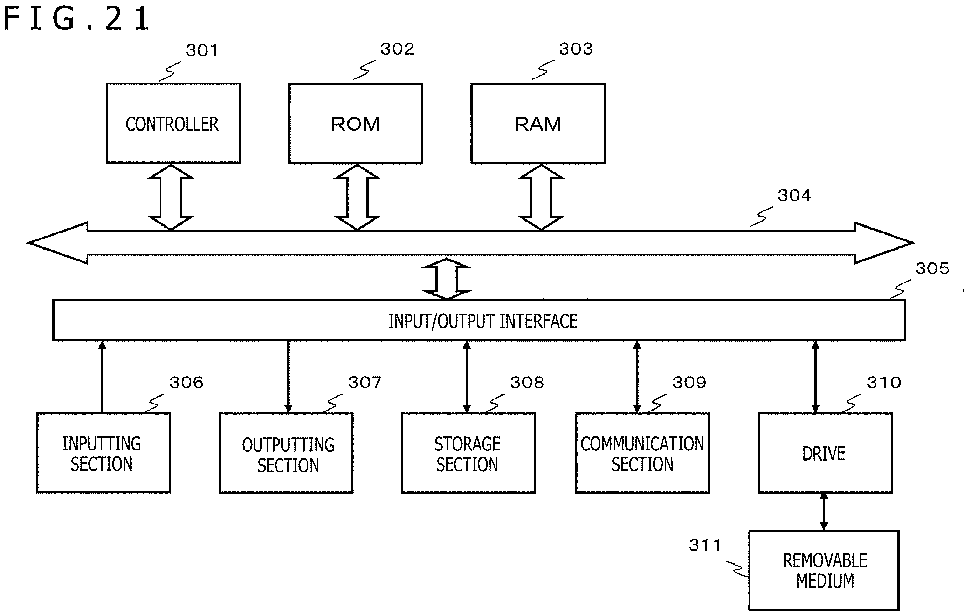

   FIG. 21 is a view illustrating an example of a hardware configuration of the image processing apparatus.

### [Description of Embodiment]

In the following, details of an image processing apparatus, an image processing system, and an image processing method as well as a program of the present disclosure are described with reference to the drawings. It is to be noted that the description is given in accordance with the following items.
1. Overview of Computer Graphics (CG) Processing
2. Example of Configuration of Image Processing System
3. Example of Configuration of Image Processing Apparatus
4. Processing Executed by Image Processing Apparatus
5. Example of Processing for Generating 3D Image Customized on Basis of User Input Information
6. Example of Hardware Configuration of Image Processing Apparatus
7. Summary of Constitution of Present Disclosure

### [1. Overview of Computer Graphics (CG) Processing]

First, an overview of computer graphics (CG) processing is described.

As described hereinabove, in recent years, a three-dimensional (3D) image generation technology that uses a computer graphics (CG) technology is utilized in various fields such as movie and game fields.

Rendering performed as a drawing process of a three-dimensional image is performed by a setting process of a "material" to a "mesh" that is a divisional region of a three-dimensional model.

The mesh is a polygonal region of a triangle, a quadrangle or the like that is a fine divisional region of a three-dimensional model.

By setting a material to this mesh, a drawing process of a three-dimensional image, rendering, is performed.

Although the "material" generally is a raw material or a material type of a body, it is, in computer graphics (CG) performed as a three-dimensional image drawing process, definition information of an optical characteristic and a material quality feeling as characteristics of a body and has a meaning of a material type to be set to an object.

For example, in the case of rendering of a person, elements that become a target of rendering include the skin, eyeballs, mouth, hair, clothes and so forth of a person. Each of such elements is divided into a plurality of meshes for each of portions having different characteristics, and by setting an optimum material to each mesh, namely, by setting an optimum optical characteristic and material quality feeling, three-dimensional model data having reality can be generated.

It is to be noted that the image processing apparatus of the present disclosure hereinafter described generates and displays a 3D image CG processed on the basis of a video obtained by imaging an imaging object, for example, a person, that is received, for example, through a network.

In this case, in the imaged video of a person, the captured image and the meshes are updated for each frame.

For the data updated in a frame unit, processing for setting appropriate materials to such portions as the skin, eyeballs, lips, hair, clothes and so forth is performed to perform generation and display of a 3D image on the real-time basis.

For example, as a mesh setting process for a moving person, a method is known by which a SCAPE (Shape Completion and Animation of People) model, which is a statistical human body shape model, is fitted to an imaging object image to perform mesh generation. According to this mesh generation method, the position and so forth of face organs are acquired from a base model and a 3D image corresponding to the base model is generated.

However, in the case where information obtained is only a captured image (texture image), which is an image of a screen space, and meshes, it is necessary to estimate positions to which various materials are to be applied for each frame. In the process of the present disclosure, face organ detection, feature point detection, semantic segmentation and so forth are executed from a captured image of a screen space to generate a mask image in each material unit to be set and then an application range of each material is determined, whereafter a material setting process is executed.

A particular process of the present disclosure is hereinafter described in detail.

As described hereinabove, the "material" is definition information of an optical characteristic and a material quality feeling as a characteristic of a body.

The "material" corresponds to a material type to be set to an object (body) configuring each mesh of a three-dimensional model. For example,
in the case where the three-dimensional model includes substances different from each other such as metal, wood, human skin, hair and so forth, it is necessary to classify the meshes in such substance units, and it is necessary to set, in a mesh of each substance, a "material" coincident with the material type of the substance.

As depicted in FIG. 1, elements of the "material" include "texture" and "shader."

The "texture" is an image to be pasted to a mesh, and
the "shader" is an algorithm for calculating light and dark appearing on a body surface when the body is lighted, namely, for calculating the intensity of reflection light, and is an algorithm for calculating a drawing color for each pixel in a mesh on the basis of a light source and a material to be set.

Basic shaders include a Lambert shader, a Phong shader, a Blinn shader and so forth.

Further, shaders that target person expression include a skin shader, a hair shader, an eyeball shader and so forth.

For a mesh that becomes a component of a three-dimensional model, three-dimensional model data having reality can be generated by setting a material close to an actual material type of the mesh, particularly, a texture or a shader.

The texture is image data that can be generated by synthesizing a plurality of texture maps having effects different from each other.

As depicted in FIG. 2, the texture map, for example, includes the following types.
(1) Base color map
(2) Shininess map
(3) Normal map
(4) Cavity map
(5) Metallic map

Effects and expressions of the texture maps are described with reference to FIG. 2.
(1) The base color map is color information that is a basis (pattern).
(2) The shininess map is a texture map for controlling the smoothness of a substance, and a place at which the luminance is higher indicates a sharper specular (specular reflection). The black (0, 0) indicates full diffuse reflection, and the white (1, 0) indicates full specular reflection.
   In particular, the shininess map represents a degree of gloss and can express a difference in shine, for example, for each portion of the face.
(3) The normal map is a texture map that expresses fine irregularities and can express fine irregularities of the face such as wrinkles and a mole.
(4) The cavity map is used when it is intended to suppress the intensity of the specular (specular reflection). For example, minute shadows such as pores or stains can be generated.
(5) The metallic map is a texture map that is utilized in the case where control of the degree of metal is to performed, and the black (0, 0) corresponds to a nonmetal and the white (1, 0) corresponds to a metal. For example, if the metallic map is applied to a metallic part, then a quality feeling of the metal can be expressed.

In this manner, the texture is image data that can be generated by synthesizing a plurality of texture maps having individually different effects.

As described with reference to FIGS. 1 and 2, in the case where a three-dimensional image is drawn (rendering), it is necessary to set an optimum material in a mesh unit including a polygonal region of a polygon such as, for example, a triangle or a quadrangle.

Elements of a "material" include a "texture" and a "shader," and by determining the "texture" and the "shader" taking the material type of a component unit of a three-dimensional model, a light source direction and so forth into consideration, a drawing process (rendering) of a three-dimensional image that provides a sense of reality can be performed.

For example, in the case where drawing (rendering) of the skin of the face of a person as a three-dimensional image is to be performed, an optimum material according to a skin characteristic of the person is set to a mesh region corresponding to the skin region of the face.

Generally, in this rendering process, in regard to which texture map is to be used to provide an intended CG effect, a designer will perform rendering after conducting various investigations in advance.

Since most of latest rendering engines are of a physically based (PBR) type, setting of each material can set a quantitatively correct value and many three-dimensional models can be reproduced with a quality feeling closer to a real one. Especially, an expression of a metallic substance has no inferiority even in comparison with a real thing.

However, when it comes to human expression, even the reflectance of the skin varies depending upon the portion, and it is very difficult to acquire and set a correct value. Further, although it deviates from the principle of PBR, only by setting a correct value, since there is a case in which a natural expression as an appearance cannot be reproduced, such devices of material setting influence much upon the quality of the 3D expression.

If much time is spent for rendering processing and such a trial and error that it is tried to set various materials having various textures and shaders is repeated, then it is possible to perform drawing of a three-dimensional model image closer to reality.

However, if it is tried to draw a three-dimensional image model to which a computer graphics (CG) effect is applied on the real-time basis, for example, to a video received through a network, then it is necessary to execute setting of a material to be set to each mesh in a very short time and sufficient investigation cannot be performed. As a result, material setting becomes inappropriate, and the 3D image frequently becomes unnatural.

The processing of the present disclosure solves such problems as described above.

In particular, for example, in the case where a three-dimensional image model to which a computer graphics (CG) effect is applied on the real-time basis, for example, to a video received through a network is to be drawn, it is made possible to generate a natural image having higher reality and indicating a sense of reality.

Further, the processing of the present disclosure makes possible virtual makeup of, for example, displaying a three-dimensional image based on the own face on a display section and applying a computer graphics (CG) effect to this display image.

In the following, the configuration of the present disclosure is described.

### [2. Example of Configuration of Image Processing System]

In the following, an example of a configuration of the image processing system of the present disclosure is described.

It is to be noted that, in the following, as the example of the system configuration, the following two examples are described.
(a) A system configuration in which the transmission apparatus side generates a 3D model based on a captured image and transmits the 3D model to the reception apparatus and the reception apparatus side applies the 3D model to generate a 3D image for display and displays the 3D image for display
(b) A system configuration in which the transmission apparatus transmits a captured image and depth data to the reception apparatus and the reception apparatus side generates a 3D model, applies the generated 3D model to generate a 3D image for display and displays the 3D image for display

First, referring to FIG. 3,
(a) the system configuration in which the transmission apparatus side generates a 3D model based on a captured image and transmits the 3D model to the reception apparatus and the reception apparatus side applies the 3D model to generate a 3D image for display and displays the 3D image for display is described.

The image processing system depicted in FIG. 3 is configured such that, on a transmission apparatus 110 side, an image is captured by a plurality of cameras (multi camera) and depth data (distance information) is generated, and the captured image and the depth data are utilized to execute a 3D modeling process for each imaging frame to generate a textured 3D model.

The transmission apparatus 110 transmits the generated 3D model for each frame to a reception apparatus 120.

The reception apparatus 120 generates a 3D image for display utilizing the received 3D model and displays the 3D image for display.

A configuration and processing of the image processing system depicted in FIG. 3 are described.

The image processing system depicted in FIG. 3 includes the transmission apparatus 110 and the reception apparatus 120.

The transmission apparatus 110 generates a 3D model from a captured imaging object image and transmits the 3D model to the reception apparatus 120 through a network 30.

The reception apparatus 120 performs a computer graphics (CG) process for the imaging object image received from the transmission apparatus 110 to generate a three-dimensional (3D) image and displays a 3D image 30 on a display section 124.

In the transmission apparatus 110, an image acquisition section 111 including a camera captures an input video of an imaging object 10.

The image acquisition section 111 includes a plurality of cameras (RGB, depth) and acquires RGB images and a depth image by imaging the imaging object 10 from various angles.

In other words, the image acquisition section 111 captures images from various angles, which are necessitated to generate a three-dimensional image of the imaging object 10.

The images captured by the image acquisition section 111 are inputted to a three-dimensional model information generation section 113 and a transmission information generation section 114.

The three-dimensional model information generation section 113 generates three-dimensional model information of an imaging object on the basis of the captured images of the imaging object 10.

The three-dimensional model information generated by the three-dimensional model information generation section 113 includes mesh data 131, texture information 132 and UV map 133 in data indicated as transmission data 130 in FIG. 3.

The mesh data 131 is a polygonal region of a triangle, a quadrangle or the like that is a fine divisional region of a three-dimensional model as described hereinabove.

By setting a material to this mesh, a drawing process of a three-dimensional image, rendering, is performed.

The texture information 132 is raw material information of a texture to be pasted to the mesh data 131.

The UV map 133 is coordinate information that is necessitated when a process for pasting a texture to mesh data, so-called texture mapping, is to be performed.

The transmission information generation section 114 generates attribute information 134 and feature point information 135 of the imaging object 10, in addition to three-dimensional model information (mesh data 131, texture information 132 and UV map 133) generated by the three-dimensional model information generation section 113, and transmits them through a communication section 115.

The attribute information 134 particularly is information of, for example, the sex, age, race, skin type and composing parts (mouth, eyes, nose and so forth). It is to be noted that, although it is possible to obtain such attribute information by image analysis, the information inputted by the user on the transmission apparatus 110 may be used.

The feature point information 135 is feature points and so forth indicative of portions of face organs of the imaging object 10 such as, for example, the eyes, nose, cheeks, clothes and so forth. This feature point extraction is executed on the basis of an image captured by the image acquisition section 111.

In this manner, the transmission information generation section 114 transmits, in addition to three-dimensional model information (mesh data 131, texture information 132 and UV map 133) generated by the three-dimensional model information generation section 113, the attribute information 134 and the feature point information 135 of the imaging object 10 to the reception apparatus 120 through the communication section 115 and the network 20.

It is to be noted that the attribute information 134 may be transmitted only once in the case where the imaging object 10 is the same. The other information is transmitted sequentially for every transmission of an image frame.

The reception apparatus 120 receives the data described above from the transmission apparatus 110, and an image processing section 122 applies the reception data to perform processing by a computer graphics (CG) process for the image (texture) of the imaging object 10 received from the transmission apparatus 110 to generate a three-dimensional image and displays a 3D image 30 on the display section 124.

It is to be noted that, in the case where a real-time display process of a three-dimensional image is to be performed by the reception apparatus 120, as pre-processing for this, generation of a three-dimensional image as a base for the imaging object 10, a storage process of the three-dimensional image into a database 123 and so forth are performed.

After various data necessitated for real-time processing are stored into the database 123 in this pre-processing, a three-dimensional image displaying process by real-time processing is performed.

In the real-time processing, processing by a computer graphics (CG) process is performed on the real-time basis for an imaging object image received from the transmission apparatus 110 to generate a three-dimensional image and displaying the resulting 3D image 30 on the display section.

In this real-time processing, for example, setting of an optimum material according to attribute information of the imaging object is performed to generate a more natural three-dimensional image and the three-dimensional image is displayed.

It is to be noted that, although the example of the configuration of the image processing system of the present disclosure depicted in FIG. 3 is configured such that three-dimensional model information (mesh data 131, texture information 132 and UV map 133) is generated by the transmission apparatus 110 side and is transmitted to the reception apparatus 120, the image processing system may otherwise have a system configuration in which the generation process of three-dimensional model information is executed by the reception apparatus 120 side.

Referring to FIG. 4,
(b) the system configuration in which the transmission apparatus transmits a captured image and depth data to the reception apparatus and the reception apparatus side generates a 3D model, applies the generated 3D model to generate a 3D image for display and displays the 3D image for display
is described.

In the image processing system depicted in FIG. 4, images (RGB, depth) are captured by a plurality of cameras (multi camera) on the transmission apparatus 110 side, and the captured images and the depth data are transmitted for each imaging frame to the reception apparatus 120.

The reception apparatus 120 utilizes the received captured images and depth data to execute a 3D modeling process for each imaging frame to generate a textured 3D model.

Further, the reception apparatus 120 utilizes the generated 3D model to generate a 3D image for display and displays the 3D image for display.

A configuration and processing of the image processing system depicted in FIG. 4 are described.

The image processing system depicted in FIG. 4 includes a transmission apparatus 110 and a reception apparatus 120.

The transmission apparatus 110 captures an imaging object image and transmits the image to the reception apparatus 120 through the network 30.

The reception apparatus 120 performs a computer graphics (CG) process for the imaging object image received from the transmission apparatus 110 to generate a three-dimensional (3D) image and displays a 3D image 30 on the display section 124.

In the transmission apparatus 110, an image acquisition section 111 including a camera captures an input video of an imaging object 10.

The image acquisition section 111 includes a plurality of cameras and images the imaging object 10 from various directions to obtain images.

In particular, the image acquisition section 111 captures images from various directions necessitated to generate a three-dimensional image of the imaging object 10.

The images captured by the image acquisition section 111 are inputted to the transmission information generation section 114.

The transmission information generation section 114 generates attribute information 134 and feature point information 135 of the imaging object 10 and transmits them together with captured image information 137 and depth information 136 acquired by the image acquisition section 111 through the communication section 115.

It is to be noted that, in the case where the imaging object 10 is the same, the attribute information 134 may be transmitted only once. The other information is transmitted sequentially for every transmission of an image frame.

The reception apparatus 120 receives the data described above from the transmission apparatus 110, and the image processing section 122 applies the reception data to perform processing by a computer graphics (CG) process for an image (texture) of the imaging object 10 received from the transmission apparatus 110 to generate a three-dimensional image and displays the 3D image 30 on the display section 124.

In the configuration depicted in FIG. 4, the image processing section 122 of the reception apparatus 120 is configured such that it includes a three-dimensional model information generation section. In particular, the image processing section 122 generates three-dimensional model information of the imaging object on the basis of a captured image of the imaging object 10.

The three-dimensional model information generated by the image processing section 122 includes the mesh data, texture information and UV map described hereinabove with reference to FIG. 3.

The mesh data 131 is a polygonal region of a triangle, a quadrangle or the like that is a fine divisional region of a three-dimensional model as described hereinabove.

By setting a material to this mesh, a drawing process of a three-dimensional image, rendering, is performed.

It is to be noted that, in the case where a real-time display process of a three-dimensional image is to be performed by the reception apparatus 120, as pre-processing for this, generation of a three-dimensional image as a base for the imaging object 10, a storage process of the three-dimensional image into the database 123 and so forth are performed.

After various data necessitated for real-time processing are stored into the database 123 in this pre-processing, a three-dimensional image displaying process by real-time processing is performed.

In the real-time processing, processing by a computer graphics (CG) process is performed on the real-time basis for an imaging object image received from the transmission apparatus 110 to generate a three-dimensional image, and processing for displaying the resulting 3D image 30 on the display section is performed.

In this real-time processing, for example, setting of an optimum material according to attribute information of the imaging object is performed to generate a more natural three-dimensional image and the three-dimensional image is displayed.

An example of particular processing to which the configuration that a three-dimensional model information generation section is set to the image processing section 122 on the reception apparatus 120 side depicted in FIG. 4 is applied is described below with reference to FIG. 5.

It is to be noted that, although the following description is directed to an example of processing in which the three-dimensional model information generation section is set to the image processing section 122 on the reception apparatus 120 side, the processing described below is different, also in the configuration example described hereinabove with reference to FIG. 3 in which the 3D model information generation section is provided on the transmission apparatus 110 side, only in the execution subject of the processing and similar processing can be applied.

As depicted in FIG. 5, the reception apparatus 120 receives, from the transmission apparatus 110, the following information:
captured image information 137,
depth information 136,
attribute information 134, and
feature point information 135.

The image processing section 122 executes, for example, the following processes.
(a1) Generation and modification (removal of a shadow and reflection (Specular) and so forth) of a three-dimensional (3D) model
(a2) Mask image generation
(a3) Imaging object attribute information acquisition
(a4) Creation of an imaging object attribute association template database

The image processing section 122 executes, for example, the processes described above.

(a1) The generation and modification (removal of a shadow and reflection (Specular) and so forth) of a 3D model is a process of generating three-dimensional model information of an imaging object and modifying texture information on the basis of the captured image of the imaging object 10 received from the transmission apparatus 110.

The three-dimensional model information to be generated includes mesh data, texture information and a UV map.

The mesh data is a polygonal region of a triangle, a quadrangle or the like that is a fine divisional region of a three-dimensional model as described hereinabove.

By setting a material to this mesh, a drawing process of a three-dimensional image, rendering, is performed.

The texture information 132 is raw material information of a texture to be pasted to the mesh data 131.

The UV map is coordinate information that is necessitated when a process for pasting a texture to mesh data, so-called texture mapping, is to be performed.

Further, the image processing section 122 performs modification (removal of shadow and reflection (Specular) and so forth) of the generated texture information as occasion demands.

The reception apparatus 120 performs CG processing such as setting of a material to a mesh unit, namely, pasting of a texture in a unit of a mesh, setting of a pixel value by a shader and so forth for the generated 3D model to generate a 3D image for display.

However, a texture image generated on the basis of a captured image inputted from the reception apparatus sometimes includes a shadow, reflection and so forth by ambient light upon imaging of the imaging object 10. If material setting, namely, CG processing such as texture pasting, is performed on the basis of an image that includes such surplus contrast information, then a shadow or reflection upon imaging is sometimes reflected, resulting in generation of an unnatural image.

As a process for preventing occurrence of such a problem as described above, modification of a texture image is performed.

(a2) The mask image generation is a generation process of a mask image for hiding a region other than a material setting target region in the case where material setting of a mesh unit is performed.

For example, in the case where a 3D image model of a person is to be generated by a CG process, it is necessary to set different materials to different parts such as the skin, hair and the like of the person.

A mask image for defining such a material setting range as just described is generated.

An example of a particular mask image and an example of material setting are hereinafter described.

(a3) The imaging object attribute information acquisition process is a process for acquiring attribute information of an imaging object imaged by the transmission apparatus 110.

Particular attribute information is information of, for example, the sex, age, race, skin type and composing parts (mouth, eyes, nose and so forth). It is to be noted that, although it is possible to obtain such attribute information by image analysis, the information inputted by the user on the transmission apparatus 110 may be used.

(a4) The creation process of an imaging object attribute association template database is creation of a database that associates attribute information of an imaging object described hereinabove with material information such as a texture with each other.

By storing this template database into the database 123 of the transmission apparatus 120, the generation process of a 3D image model on the real-time basis can be performed at a high speed.

A particular example of the template database is hereinafter described.

In this manner, the image processing section 122 of the reception apparatus 120 depicted in FIG. 5 performs the following processes.
(a1) Generation of a 3D model and modification (removal of a shadow and reflection (Specular) and so forth) of a texture image
(a2) Mask image generation
(a3) Imaging object attribute information acquisition
(a4) Creation of imaging object attribute association template database

Data generated as a result of the above-described processes by the image processing section 122 is stored into the database 123 as a storage section.

As depicted in FIG. 5, in the database 123, the following information is stored.
(b1) Mask image
(b2) Imaging object attribute information
(b3) Imaging object attribute association template database

Such data are data generated on the basis of data received from the transmission apparatus 110 by the image processing section 122 of the reception apparatus 120 depicted in FIG. 5.

After predetermined data is stored into the database, real-time processing, namely, real-time processing of the reception apparatus 120 of receiving data of an imaging object image or the like transmitted from the transmission apparatus 110, performing CG processing on the real-time basis for the reception data to generate a 3D image for display and displaying the 3D image for display on the display section, is executed.

In the real-time processing, the image acquisition section 111 on the transmission apparatus 110 side captures a real-time image of the imaging object 10.

The image captured by the image acquisition section 111 is inputted to the transmission information generation section 114.

The transmission information generation section 114 transmits
captured image information 137,
depth information 136,
attribute information 134, and
feature point information 135
to the reception apparatus 120 through the communication section 115 and the network 20.

It is to be noted that, as described hereinabove, the attribute information 134 may be transmitted only once in the case where there is no change of the imaging object 10.

The reception apparatus 120 uses the information inputted from the transmission apparatus 110 to generate a 3D image that is an output video to be displayed on the display section 124 and displays the 3D image.

It is to be noted that, in the real-time processing, a process of utilizing a captured image at present of an imaging object, applying information acquired and stored already in the database 123 in pre-processing to generate a CG-processed 3D image and displaying the 3D image is performed.

### [3. Example of Configuration of Image Processing Apparatus]

Now, a particular configuration of an image processing apparatus that performs a 3D image generation process, namely, of the reception apparatus 120 depicted in FIG. 5, is described with reference to FIG. 6 and so forth.

FIG. 6 is a view depicting an example of a configuration of an image processing apparatus, namely, of an image processing apparatus 200 that corresponds to the reception apparatus 120 depicted in FIG. 5.

As depicted in FIG. 6, the image processing apparatus 200 includes an image inputting section (communication section) 201, a user inputting section (user IF) 202, an image processing section 203, a storage section (DB) 204 and a display section 205.

The image inputting section (communication section) 201 corresponds to a communication section 121 of the reception apparatus 120 depicted in FIGS. 4 and 5.

The user inputting section (user IF) 202 is an inputting section configured in the reception apparatus 120 although it is not depicted in the reception apparatus 120 depicted in FIGS. 4 and 5.

The image processing section 203 corresponds to the image processing section 122 of the reception apparatus 120 depicted in FIGS. 4 and 5.

The storage section (DB) 204 corresponds to the database 123 of the reception apparatus 120 depicted in FIGS. 4 and 5.

The display section 205 corresponds to the display section 124 of the reception apparatus 120 depicted in FIGS. 4 and 5.

As depicted in FIG. 6, the image processing section 203 includes an image information analysis section 211, a mesh editing section 212, a material application section 213 and a rendering section 214.

The image information analysis section 211 includes a feature amount extraction section 211a and an attribute analysis section 211b.

The mesh editing section 212 includes a mesh acquisition section 212a, a mesh division section 212b and a model addition section 212c.

The material application section 213 includes a mask image generation section 213a and a texture map generation section 213b.

Into the storage section (DB) 204, data acquired from the transmission apparatus 110 by the pre-processing described hereinabove with reference to FIG. 4 and data generated by processing of the image processing section 203 are stored. Also data generated by the image processing section 203 in the real-time processing described hereinabove with reference to FIG. 5 is stored.

An example of storage data of the storage section (DB) 204 is depicted in FIG. 7.

As depicted in FIG. 7, into the storage section (DB) 204, a mask image 222, imaging object attribute information 223, a template database 224 and so forth are stored.

The mask image 222 is a mask image for masking a region other than a material setting region in a material setting process for a mesh applied in the real-time processing.

In the processing of the present disclosure, detection of portions of face organs such as the eyes, nose, cheeks or clothes, feature point detection and so forth from each of captured images of different frames received from the transmission apparatus 110 are performed to generate a mask image in a material unit to be set to each portion. Then, an application range of each material is determined and then a material setting process for each portion is executed.

The mask image 222 is an image to be applied to masking of each imaging object component unit (portion unit).

A particular example of a mask image and an application process are hereinafter described.

The imaging object attribute information 223 is information acquired by the process described hereinabove with reference to FIG. 5.

The particular attribute information is information of, for example, the sex, age, race, skin type and composing parts (mouth, eyes, nose and so forth). It is to be noted that, although also it is possible to obtain such attribute information by image analysis, the information inputted by the user on the transmission apparatus 110 or the reception apparatus 120 may be used instead.

The template database 224 includes, as depicted in FIG. 7,
correspondence data of attribute information and materials.

The attribute information includes imaging object attribute information and portion attribute information.

The materials include texture maps.

The imaging object attribute information is attribute information of a person who is an imaging object such as, for example, the "sex," "age," "race" and "skin type."

The portion attribute information is attribute information that becomes identification information of portions of the face of a person such as, for example, the eyes, nose, eyebrows and cheeks.

Such attribute information can be acquired on the basis of image data received from the transmission apparatus 110 in pre-processing or real-time processing or may be acquired on the basis of user input information.

This template database is correspondence data of attribute information and materials.

In the case where the image processing section 203 of the image processing apparatus 200 performs a process for generating a 3D image to which a CG effect is applied by real-time processing, the image processing section 203 can refer to the template database to immediately acquire materials to be set to such portions as the eyes, nose, cheeks and so forth of a person detected from an imaging object image received from the transmission apparatus 110, for example, from a captured image of the person.

In particular, by utilizing the template database, it becomes possible to perform optimum material setting in an imaging object component unit (portion unit) in a short time in a frame unit configuring an imaging object video transmitted from the transmission apparatus 110 and the 3D image generation can be executed as real-time processing.

It is to be noted that, although, according to the configuration of the template database 224 depicted in FIG. 7, only a texture map is recorded as a material, a shader is not recorded.

The shader is an algorithm for calculating a drawing color for each pixel in a mesh as described hereinabove. In the case where processing utilizing the template database for setting depicted in FIG. 7 is to be performed, a texture is acquired from the template database, while, for a shader, a calculation process is executed every time in a frame unit to perform a determination process of a drawing color in a pixel unit in a mesh.

An example of a configuration of the template database 204 having a different setting from that of the template database 224 depicted in FIG. 7 is depicted in FIG. 8.

The template database 224 depicted in FIG. 8 has recorded therein a texture map and a shader as a material.

If the template database having the setting depicted in FIG. 8 is utilized, then it becomes possible to acquire not only a texture but also information of a shader from the template database, and it becomes possible to determine a texture in a mesh and a drawing color for each pixel in a frame unit and in an imaging object component unit (portion unit).

### [4. Processing Executed by Image Processing Apparatus]

Now, particular processing executed by an image processing apparatus that performs a 3D image generation process on the real-time basis, namely, by the image processing apparatus 200 having the configuration described with reference to FIG. 6 (= reception apparatus 120 of FIG. 5) is described with reference to FIG. 9 and so forth.

FIG. 9 is a flow chart illustrating a sequence of the processing executed by the image processing apparatus, namely, the image processing apparatus 200 depicted in FIG. 6 (= reception apparatus 120 of FIG. 5).

In the following, a particular example of processing executed by the image processing apparatus 200 depicted in FIG. 6 (= reception apparatus 120 of FIG. 5) is described with reference to the flow chart.

It is to be noted that processes in accordance with the flow chart depicted in FIG. 9 are executed in accordance with a program stored, for example, in the storage section of the image processing apparatus under the control of a data processing section including a controller including a CPU and so forth having a program execution function.

The processes at the steps of the flow depicted in FIG. 9 are described sequentially.

### (Step S101)

First, the image inputting section 201 of the image processing apparatus 200 inputs captured image information 137 and depth information that become a generation source of a 3D image.

It is to be noted that the processes at steps S101 to S109 depicted in this flow are executed for each image frame configuring a captured video of an imaging object transmitted, for example, from the transmission apparatus 110 depicted in FIG. 5.

In particular, at final step S109, rendering of a 3D image to which a CG effect is applied is performed in an image frame unit transmitted from the transmission apparatus 110.

### (Step S102)

Then at step S102, the attribute analysis section 211b of the image information analysis section 211 analyzes attributes (sex, age, skin type and so forth) of a person of the imaging object on the basis of the inputted captured image.

It is to be noted that also it is possible to perform this process in advance, or the process may be performed as real-time processing.

As described hereinabove, the attribute information acquisition process is performed by analyzing the captured image information 137 or 3D model information transmitted from the transmission apparatus 110.

The particular attribute information includes information of, for example, the sex, age, race, skin type and composing parts (mouth, eyes, nose and so forth) and so forth. It is to be noted that, although it is possible to obtain such attribute information by image analysis, the information inputted by the user may be used.

### (Step S103)

Then at step S103, the feature amount extraction section 211a sets segmentation regions corresponding to individual portions (eyes, nose, mouth and eyebrows that are face organs, skin region, body portion, hair, clothes and so forth) of an imaging object (person) on the basis of the feature amounts of the captured image inputted at step S101.

An example of feature points of the eyes, nose, mouth, eyebrows and so forth that are face organs is depicted in FIG. 10.

In the example depicted in FIG. 10, feature points 1 to 17 are feature points indicative of the profile of the face.

Feature points 18 to 22 and 23 to 27 are feature points indicative of the eyebrows.

Feature points 28 to 36 are feature points indicative of the nose.

Feature points 37 to 48 are feather points indicative of the eyes.

Feature points 49 to 68 are feature points indicative of the mouth.

For example, the feature points are detected from the image to set segmentation regions corresponding to the portions (eyes, nose, mouth and eyebrows that are face organs, skin region, body portion, hair, clothes and so forth).

It is to be noted that, for the setting of segmentation regions, also semantic segmentation that is conventionally known can be utilized in addition to the process based on feature points described above.

For example, for region detection of the face region, hands, hair, clothes and so forth or for setting of segmentation regions, utilization of the semantic segmentation is possible.

### (Step S104)

Then at step S104, the mask image generation section 213a generates a mask image to be applied to perform material setting in a segmentation region unit based on the feature amounts.

As described hereinabove, the mask image is a mask image for masking a region other than a material setting region in a material setting process for a mesh applied in real-time processing.

In the processing of the present disclosure, every time a frame is received from the transmission apparatus 110, from each of captured images of different frames, detection of portions such as face organs like the eye, nose, cheeks and clothes, feature point detection and so forth are executed to generate mask images in a material unit to be set to each portion and determine an application range of the material, and then a material setting process for each portion is executed.

A mask image is an image that is applied to masking of an imaging object component unit (portion unit).

An example of a mask image is described with reference to FIG. 11.

FIG. 11 depicts the following figures.

### (A) input image

### (1) to (8) Mask image of each segmentation region unit

For example, (1) the face mask is a mask to be applied upon material setting to a face region in an imaging object image. With the face mask, an image region other than the face region is masked. By performing the material setting process utilizing this face mask, the material is applied only to the face region while the material is not applied to any other region.

Similarly, (2) the hand mask is a mask to be applied upon material setting to a hand region in an imaging object image. With the hand mask, an image region other than the hand region is masked. By performing the material setting process utilizing this hand mask, the material is applied only to the hand region while the material is not applied to any other region.

The foregoing similarly applies also to the (3) hair mask, (4) clothes mask, (5) eye mask, (6) nose mask, (7) mouth mask and (8) cheek mask, and each of the masks mentioned is a mask image having a configuration for masking all image regions other than the material setting target region.

At step S104, the mask image generation section 213a generates a mask image to be applied to perform material setting of a segmentation region unit based on the feature amounts, namely, such a mask image as depicted, for example, in FIG. 11.

It is to be noted that the mask image depicted in FIG. 11 is an example, and various mask images are generated in response to an imaging object.

For a generation process of a mask image, a configuration that utilizes a template image may be applied. For example, template images of the mask images of the (1) face mask, (2) hand mask, (3) hair mask, (4) clothes mask, (5) eye mask, (6) nose mask, (7) mouth mask and (8) cheek mask depicted in FIG. 11 are stored in the storage section 204 in advance, and by modifying any of the template mask images in accordance with an imaging object image inputted from the transmission apparatus, a mask image that fits an input image can be generated.

An example of a generation process of an eye mask image to which a template image is applied is described with reference to FIG. 12.

For example, such a template mask image for the application to an eye as depicted in (1) of FIG. 12 is stored in the storage section 204 in advance.

The mask image generation section 213a selects feature points in the proximity of a region of an eye from among feature points in a captured image of an imaging object inputted through the image inputting section 201 as used feature points. The used feature points in (2) of FIG. 12 are feature points in the proximity of a left eye region of the imaging object image.

The feature points correspond to the feature points described hereinabove with reference to FIG. 10.

A rotation process for fitting the template mask image depicted in (1) to a region of an eye of the captured image and a resize process are performed on the basis of the feature points.

(3) of FIG. 12 depicts the rotation process, and (4) depicts the resize process.

As depicted in (3) of FIG. 12, the rotation angle of the template image is calculated on the basis of a line of the feature points {17, 29}.

Further, as depicted in (4) of FIG. 12, the template image in the region of the feature points {17, 23, 24, 25, 26, 27, 29} is resized so as to fit to the input image. In the present example, resize to 0.9 times in the X direction (horizontal direction) and 1.0 time in the Y direction (vertical direction) is performed.

By performing such processes as described above, it is possible to generate an eye mask image fitted to the region of an eye of the captured image utilizing the template mask image depicted in (1).

FIG. 13 is a view illustrating an example of a generation process of a nose mask image to which a template image is applied.

For example, such a template mask image for the application to a nose as depicted in (1) of FIG. 13 is stored in the storage section 204 in advance.

The mask image generation section 213a selects feature points in the proximity of a region of the nose from among feature points in a captured image of an imaging object inputted through the image inputting section 201 as used feature points. The used feature points in (2) of FIG. 13 are feature points in the proximity of a left nose region of the imaging object image.

The feature points correspond to the feature points described hereinabove with reference to FIG. 10.

A rotation process for fitting the template mask image depicted in (1) to a region of the nose of the captured image and a resize process are performed on the basis of the feature points.

(3) of FIG. 13 depicts the rotation process, and (4) depicts the resize process.

As depicted in (3) of FIG. 13, the rotation angle of the template image is calculated on the basis of a line of the feature points {37, 46}.

Further, as depicted in (4) of FIG. 13, the template image in the region of the feature points {28, 29, 30, 31, 40, 43} is resized so as to fit to the input image. In the present example, resize to 0.7 times in the X direction (horizontal direction) and 1.1 times in the Y direction (vertical direction) is performed.

By performing such processes as described above, it is possible to generate a nose mask image fitted to the region of the nose of the captured image utilizing the template mask image depicted in (1).

FIG. 14 is a view illustrating an example of a generation process of a cheek mask image to which a template image is applied.

For example, such a template mask image for the application to a cheek as depicted in (1) of FIG. 14 is stored in the storage section 204 in advance.

The mask image generation section 213a selects feature points in the proximity of a region of a cheek from among feature points in a captured image of an imaging object inputted through the image inputting section 201 as used feature points. The used feature points in (2) of FIG. 14 are feature points in the proximity of a left cheek region of the imaging object image.

The feature points correspond to the feature points described hereinabove with reference to FIG. 10.

A rotation process for fitting the template mask image depicted in (1) to a region of the cheek of the captured image and a resize process are performed on the basis of the feature points.

(3) of FIG. 14 depicts the rotation process, and (4) depicts the resize process.

As depicted in (3) of FIG. 14, the rotation angle of the template image is calculated on the basis of a line of the feature points {17, 29}.

Further, as depicted in (4) of FIG. 14, the template image in the region of the feature points {17, 29, 55} is resized so as to fit the input image. In the present example, resize to 0.8 times in the X direction (horizontal direction) and 1.0 time in the Y direction (vertical direction) is performed.

By performing such processes as described above, it is possible to generate a cheek mask image fitted to the region of the cheek of the captured image utilizing the template mask image depicted in (1).

FIG. 15 is a view illustrating an example of a generation process of a mouth peripheral area mask image to which a template image is applied.

For example, such a template mask image for the application to a mouth peripheral area as depicted in (1) of FIG. 15 is stored in the storage section 204 in advance.

The mask image generation section 213a selects feature points in the proximity of a region of a mouth peripheral area from among feature points in a captured image of an imaging object inputted through the image inputting section 201 as used feature points. The used feature points in (2) of FIG. 15 are feature points in the proximity of a mouth peripheral area region of the imaging object image.

The feature points correspond to the feature points described hereinabove with reference to FIG. 10.

A rotation process for fitting the template mask image depicted in (1) to a region of the mouth peripheral area of the captured image and a resize process are performed on the basis of the feature points.

(3) of FIG. 15 depicts the rotation process, and (4) depicts the resize process.

As depicted in (3) of FIG. 15, the rotation angle of the template image is calculated on the basis of a line of the feature points {49, 55}.

Further, as depicted in (4) of FIG. 15, the template image in the region of the feature points {9, 31, 49, 55} is resized so as to fit to the input image. In the present example, resize to 1.3 times in the X direction (horizontal direction) and 0.9 times in the Y direction (vertical direction) is performed.

By performing such processes as described above, it is possible to generate a mouth peripheral area mask image fitted to the region of the mouth peripheral area of the captured image utilizing the template mask image depicted in (1).

Also a mask image generation process that does not use a template image is possible.

FIG. 16 is a view illustrating an example of a process for generating a lip mask image without utilizing a template image.

The mask image generation section 213a selects feature points in the proximity of a region of the lips from among feature points in a captured image of an imaging object inputted through the image inputting section 201 as used feature points. The used feature points in (2) of FIG. 16 are feature points in the proximity of a region of the lips of the imaging object image.

The feature points correspond to the feature points described hereinabove with reference to FIG. 10.

A lip mask image is generated on the basis of the feature points.

(3) of FIG. 16 depicts a generation process of an upper lip mask image, and (4) depicts a generation process of a lower lip mask image.

As depicted in (3) of FIG. 16, in the generation process of an upper lip mask image, an upper lip mask image is generated on the basis of the profile of the feature points {49, 50, 51, 52, 53, 54, 55, 65, 64, 63, 62, 61}.

Further, as depicted in (4) of FIG. 16, in the generation process of a lower lip mask image, a lower lip mask image is generated on the basis of the profile of the feature points {49, 60, 59, 58, 57, 56, 55, 65, 64, 63, 62, 61}.

By performing such processes as described above, it is possible to generate a lip mask image fitted to the region of the lips of the captured image without utilizing the template mask image.

FIG. 17 is a view illustrating an example of a process for generating a mouth inside area mask image without utilizing a template image.

The mask image generation section 213a selects feature points in the proximity of a region of a mouth inside area from among feature points in a captured image of an imaging object inputted through the image inputting section 201 as used feature points. The used feature points in (2) of FIG. 17 are feature points in the proximity of a region of a mouth inside area of the imaging object image.

The feature points correspond to the feature points described hereinabove with reference to FIG. 10.

A mouth inside area image is generated on the basis of the feature points.

(3) of FIG. 17 depicts a generation process of a mouth inside area lip mask image.

As depicted in (3) of FIG. 17, in the generation process of a mouth inside area mask image, a mouth inside area mask image is generated on the basis of the profile of the feature points {61, 62, 63, 64, 65, 66, 67, 68}.

By performing such processes as described above, it is possible to generate a mouth inside area mask image fitted to the region of the mouth inside area of the captured image without utilizing the template mask image.

Also for the mask images of the other (1) face mask, (2) hand mask, (3) hair mask, (4) clothes mask and so forth, a mask image according to an imaging object image can be generated utilizing or without utilizing a template image.

In this manner, at step S104 of the flow depicted in FIG. 9, the mask image generation process is executed, for example, by the processes described above.

Processes at step S105 and so forth of the flow chart of FIG. 9 are described.

### (Step S105)

At step S105, the mesh acquisition section 212a sets a mesh to the 3D model corresponding to the captured image, and the mesh division section 212b executes a mesh division process according to a mask image.

As described hereinabove, the mesh is a polygonal region of a triangle, a quadrangle or the like that is a fine divisional region of a three-dimensional model.

By setting a material to this mesh, a drawing process of a three-dimensional image, rendering, is performed. In the case where a three-dimensional image is to be drawn (rendered), it is necessary to set an optimum material in a mesh unit.

For a mesh that becomes a component of a three-dimensional model, three-dimensional model data having reality can be generated by setting a material, particularly, a texture or a shader, close to an actual material type of the mesh.

A mesh can be acquired by applying a prescribed algorithm utilizing a captured image inputted from the transmission apparatus and three-dimensional model data of an imaging object stored into a database by pre-processing described hereinabove with reference to FIG. 4. It is to be noted that mesh setting is performed preferably taking setting of a final CG effect applied three-dimensional image to be generated by a rendering process, for example, a setting condition of a light source position or the like, into consideration.

At step S105, the mesh acquisition section 212a first sets a mesh on the three-dimensional model corresponding to the input captured image and the mesh division section 212b executes a mesh division process according to the mask image generated at step S104.

The mask image includes various mask images such as, for example, (1) the face mask to (8) the cheek mask and so forth as described hereinabove with reference to FIG. 11. They are masks that are utilized in a material application process for each portion.

However, regions of portions prescribed by a mask image and segmentation regions prescribed by meshes do not coincide with each other in many cases.

For example, such a situation occurs that one mesh region that is one triangular region extending between a region that is not masked by the eye mask (= material application region corresponding to the eyes) and a region other than the eyes that are not masked with the eye mask (= material non-application region corresponding to the eyes).

Since the material setting is executed in a mesh unit, if such a mesh as described above exists, then a setting process of the same material is performed for the region of an eye and a region other than the eyes.

In order to prevent such a situation as just described, it is necessary to perform new mesh setting such that a mesh is re-divided in accordance with a mask image to form a material application region that is not masked by the mask image and a material non-application region that is masked by the mask image.

This process is executed by the mesh division section 212b.

In other words, a mesh division process according to the mask image generated at step S104 is executed.

### (Step S106)

Then at step S106, the model addition section 212c places the three-dimensional model stored in the storage section (DB) 204 on the basis of the feature amount information. For example, a process for placing a corneal model in front of an eyeball or a like process is executed.

Although a generation process of a three-dimensional image is executed basically as a process for setting a material to a mesh, in regard to a specific portion such as, for example, an eyeball, the reality can be increased if a process for pasting a three-dimensional model prepared in advance is performed.

At step S106, such a three-dimensional model addition process as just described is performed.

It is to be noted that the three-dimensional model is stored in the storage section (DB) 204 in advance. For example, it is possible to utilize three-dimensional model information received from the transmission apparatus 110 in pre-processing.

For example, in the case where a process for placing a corneal model in front of an eyeball, the gaze direction is set by setting a model in which a white highlight region is set in the black iris.

In order to set a highlight region to an appropriate position in the black iris, for example, it is preferable to detect the gaze direction of a captured image received from the transmission apparatus and determine a highlight region setting position on the basis of the detected gaze direction.

Further, it is preferable to set the light source position forwardly of a face image such that a highlight region in the black iris of a face image in a 3D image generated by rendering and the light source position of the displayed 3D image correspond to each other.

### (Step S107)

Then at step S107, the texture map generation section 213b generate a texture map (base color, shininess, cavity, normal and so forth) necessary for each material in accordance with an attribute analysis result and the template database.

As described hereinabove, in the case where a generation process of a three-dimensional image is to be performed, to a mesh that is a component of the three-dimensional image, a material close to an actual material type of the mesh, particularly, a texture or a shader, is set. By this material setting process, a three-dimensional image having reality can be generated.

The texture is image data that can be generated by synthesizing a plurality of texture maps having different effects from each other.

As described hereinabove with reference to FIG. 2, the texture map, for example, includes the following types.
(1) Base color map
(2) Shininess map
(3) Normal map
(4) Cavity map
(5) Metallic map

(1) The base color map is color information that is a basis (pattern).
(2) The shininess map is a texture map for controlling the smoothness of a substance, and a place at which the luminance is higher indicates a sharper specular (specular reflection). The black (0, 0) indicates full diffuse reflection, and the white (1, 0) indicates full specular reflection.
   In particular, the shininess map represents a degree of gloss and can express a difference in shine, for example, for each portion of the face.
(3) The normal map is a texture map that expresses fine irregularities and can express fine irregularities of the face such as wrinkles and a mole.
(4) The cavity map is used when it is intended to suppress the intensity of the specular (specular reflection). For example, minute shadows such as pores or stains can be generated.
(5) The metallic map is a texture map that is utilized in the case where control of the degree of metal is to performed, and the black (0, 0) corresponds to a nonmetal and the white (1, 0) corresponds to a metal. For example, if the metallic map is applied to a metallic part, then a quality feeling of the metal can be expressed.

In this manner, the texture is image data that can be generated by synthesizing a plurality of texture maps having individually different effects.

At step S107, a texture that is an element of a material to be set to each mesh of a three-dimensional image to be generated by rendering is determined.

For this texture determination process, the template database 224 stored in the storage section (DB) 204 is utilized.

The template database 224 includes, as depicted described hereinabove with reference to FIG. 7,
correspondence data of attribute information and materials.

The attribute information includes imaging object attribute information and portion attribute information.

The materials include texture maps.

The imaging object attribute information is attribute information of a person who is an imaging object such as, for example, the "sex," "age," "race" and "skin type."

The portion attribute information is attribute information that is identification information of each portion of the face of a person such as, for example, an eye, the nose, an eyebrow, a cheek or the like.

Such attribute information as described above is information that can be acquired at step S102. For example, the attribute information can be acquired on the basis of image data received from the transmission apparatus 110 in the pre-processing described hereinabove with reference to FIG. 4 or the real-time processing described hereinabove with reference to FIG. 5, or may be acquired on the basis of user input information.

As depicted in FIG. 7, the template database is correspondence data between attribute information and materials.

In the case where the image processing section 203 of the image processing apparatus 200 performs a process for generating a 3D image to which a CG effect is applied by real-time processing, the image processing section 203 can refer to the template database to immediately acquire a material to be set to a portion of a person such as an eye, the nose, a cheek or the like detected from an imaging object image received from the transmission apparatus 110, for example, from a captured image of a person.

According to the configuration of the template database 224 depicted in FIG. 7, a texture map is recorded as a material.

In particular, a setting of a texture map to be applied in response to attribute information (imaging object attributes and portion attributes) is recorded.

In particular, texture maps to be applied corresponding to the imaging object attributes and the portion attributes such as
(a) setting of a texture map to be pasted to a mesh in a region around an eye,
(b) setting of a texture map to be pasted to a mesh in a region of the ridge of the nose,
(c) setting of a texture map to be pasted to a mesh in a region of an eyebrow,
(d) setting of a texture map to be pasted to a mesh in a region of a cheek,
of, for example, such imaging object attributes of a normal skin of a 20 to 35 year old Caucasoid woman are recorded.

By utilizing this template database, it becomes possible to perform optimum material setting of an imaging object component unit (portion unit) in a short time in a frame unit configuring an imaging object video transmitted from the transmission apparatus 110, and 3D image generation can be executed as real-time processing.

It is to be noted that, in the case where a process utilizing the template database of the setting depicted in FIG. 7 is to be performed, a texture is acquired from the template database while, for a shader, a calculation process is executed every time in a frame unit to perform a determination process of a drawing color in a pixel unit in a mesh.

As described hereinabove, the template database 224 depicted in FIG. 8 has a texture map and a shader recorded therein as a material.

If the template database of the setting depicted in FIG. 8 is utilized, then it is possible to acquire also information of a shader from the template database together with a texture, and it is possible to determine a texture in a mesh in a frame unit and in an imaging object component unit (portion unit) and a drawing color for each pixel.

It is to be noted that, in the case where material setting is to be performed utilizing the template database depicted in FIG. 7 or 8, also it is possible to perform setting change of the template database according to a taste of a user.

For example, although also a configuration that a material set as default data in advance is utilized as the material to be set to a nose region is possible, also it is possible to perform such a process as to change the setting such that a material having a texture that emphasizes the ridge of the nose more is set.

Also it is possible to perform such a process as to change the setting such that, as a material to be set to a cheek, a material having a texture that looks smoother skin type.

### (Step S108)

At step S108, the rendering section 214 executes rendering for applying a material to a 3D model.

In this process, at step S107, material setting to a mesh of each portion, namely, pasting of a texture, is performed utilizing the texture map corresponding to the attribute information (imaging object attributes and portion attributes) acquired from the template database 224. Further, a shader that is a determination algorithm of a drawing color of a pixel unit is applied to perform a determination process of a drawing color in a pixel unit.

It is to be noted that, in the case where the template database 224 depicted in FIG. 8 is utilized, also information of a shader can be acquired from the template database together with the texture, and determination of a texture in a mesh and a drawing color for each pixel can be performed in an imaging object component unit (portion unit) in a frame unit.

### (Step S109)

Finally, at step S109, the display section 205 displays a rendering result generated at step S108.

It is to be noted that the processes at steps S101 to S109 are executed for each image frame inputted by the image inputting section 201.

This processing is executed as real-time processing, and for example, an image captured by the transmission apparatus 110 side depicted in FIG. 5 is displayed on the real-time basis as a three-dimensional image to which a CG effect is applied on the reception apparatus 120 side.

One of great elements that make this real-time processing implementable is a template database.

In particular, by utilizing the template database in which a texture map to be applied is registered corresponding to an imaging object attribute and a portion attribute, it becomes possible to perform optimum material setting of an imaging object component unit (portion unit) in a frame unit configuring an imaging object video transmitted from the transmission apparatus 110, and 3D image generation can be executed as real-time processing.

### [5. Example of Processing in Which 3D Image for Which Customize Based on User Input Information Is Performed Is Produced]

Now, an example of processing in which a 3D image for which customize based on user input information is performed is produced is described.

The image processing apparatus 200 depicted in FIG. 6 can input customize information of a three-dimensional image generated by rendering through the user inputting section 202.

For example, decoration setting information of the face, particularly, various kinds of setting information such as settings of a color of a lip stick, a color of a blush, an application region and an eyebrow, can be inputted as customize information.

The image processing section 203 of the image processing apparatus 200 can perform rendering of a three-dimensional image to be displayed on the display section 205 utilizing the customize information inputted through the user inputting section 202.

For example, such processes as setting the image inputting section 201 as an imaging section, generating a 3D image in which makeup is performed for an own face image captured by the imaging section and displaying the 3D image on the display section 205 can be performed.

In such a process as just described, a process for generating and displaying not a 3D image in which an imaging object is reproduced in reality but a 3D image on which an effect of a beautiful skin in a photo booth or a virtual makeup is reflected by applying a material for implementing own ideal skin type of or makeup becomes possible.

In the present working example, a process is performed which utilizes a template database that is attribute information-material correspondence data that permits various customizes (modification, change).

An example of the template database applied in the present working example is described with reference to FIG. 18.

As depicted in FIG. 18, the template database 224 is
correspondence data between customizable attribute information and materials that are information that can be corrected and changed by the user.

The customizable attribute information includes imaging object attribute information and portion attribute information.

The customizable materials include texture maps.

The imaging object attribute information is customizable attribute information of a person who is an imaging object such as, for example, "sex," "age," "race," "skin type" and so forth.

The portion attribute information is customizable information that is identification information of each portion of the human face such as, for example, an eye, the nose, an eyebrow, a cheek or the like.

In the present working example, the correspondence relation between the attribute information and the materials can be set and changed on the basis of user input information inputted from the user inputting section 202.

In the case where the image processing section 203 of the image processing apparatus 200 performs a process for generating a 3D image for which a CG effect is performed by real-time processing, the image processing section 203 can refer to the template database to immediately acquire materials to be set to such portions as the eyes, a nose and cheeks of the person detected from a imaging object image received from the transmission apparatus 110, for example, a captured image of the person.

In particular, by utilizing the template database, optimum material setting of an imaging object component unit (portion unit) can be performed in a short time in a frame unit configuring an imaging object video inputted through the image inputting section 201, and 3D image generation can be executed as real-time processing.

It is to be noted that, in the configuration of the template database 224 depicted in FIG. 18, only a texture map is recorded as the material, but a shader is not recorded.

As described above, the shader is an algorithm for calculating a drawing color for each pixel in a mesh. In the case where a process utilizing the template database of the setting depicted in FIG. 18 is to be performed, a texture is acquired from the template database and, in regard to the shader, a calculation process is performed in a frame unit every time to perform a determination process of a drawing color in a pixel unit in the mesh.

An example of a configuration of the template database 204 having a different setting from that of the template database 224 depicted in FIG. 18 is depicted in FIG. 19.

The template database 224 depicted in FIG. 19 has texture maps and shaders recorded as materials therein.

If the template database having the setting depicted in FIG. 19 is utilized, then also information of a shader can be acquired from the template database together with a texture and a drawing color for each texture and for each pixel in a mesh can be determined in a frame unit and an imaging object component unit (portion unit).

In the present working example, a process utilizing the template database in which various customizable attribute information and materials are associated with each other is performed.

In this manner, by utilizing the template database in which various customizable attribute information and materials are associated with each other, it is possible to generate and display not a 3D image in which an imaging object is reproduced in reality but a 3D image that allows application of such a material as implement own ideal skin type or makeup and on which an effect of virtual makeup is reflected.

A flow chart depicted in FIG. 20 is a flow chart illustrating a processing sequence for performing rendering of a three-dimensional image to be displayed on the display section 205 utilizing customize information inputted through the user inputting section 202.

In the following description, a particular example of a three-dimensional image generation process on which user input information to be executed by the image processing apparatus 200 depicted in FIG. 6 (= reception apparatus 120 of FIG. 5) is reflected is described in accordance with the flow chart.

It is to be noted that the processing according to the flow chart depicted in FIG. 20 is executed under the control of a data processing section including a controller provided with a CPU having a program execution function and so forth, for example, in accordance with a program stored in a storage section of an image processing apparatus.

Processes at steps of the flow depicted in FIG. 20 are described successively.

### (Step S201)

First, at step S201, customize information (CG effect and so forth) desired by the user is acquired from user input information inputted through the user inputting section 202 of the image processing apparatus 200.

### (Step S202)

Then, the image inputting section 201 of the image processing apparatus 200 inputs a captured image (texture) that becomes a generation source of a 3D image.

It is to be noted that processes at steps S202 to S209 depicted in the flow chart are executed for each image frame configuring a captured video of an imaging object inputted from the image inputting section 201.

In particular, at final step S209, rendering of a 3D image to which a CG effect is applied in an input image frame unit is performed.

### (Steps S203 to S206)

Processes at next steps S203 to S206 are similar to the processes at steps S103 to S106 described hereinabove with reference to the flow chart depicted in FIG. 9.

In particular, the processes described below are executed.

At step S203, the characteristic extraction section 211a sets segmentation regions corresponding to portions of an imaging object (person) (eyes, nose, mouth, eyebrows that are face organs, a skin region, a body portion, hair, clothes and so forth) on the basis of feature amounts of the captured image inputted at step S202.

For example, a segmentation region corresponding to portions (eyes, nose, mouth and eyebrows that are face organs, a skin region, a body portion, hair, clothes and so forth) is set on the basis of feature points of the eyes, nose, mouth, eyebrows that are face organs described hereinabove with reference to FIG. 10.

Then at step S204, the mask image generation section 213a generates a mask image to be applied for performing material setting in a segmentation region unit based on the feature amounts.

For example, mask images corresponding to various portions described hereinabove with reference to FIG. 11 are generated.

Further, at step S205, the mesh acquisition section 212a sets a mesh to a 3D model corresponding to a captured image and the mesh division section 212b executes a mesh division process according to a mask image.

As described above, the mesh is a polygonal region such as a triangle or a quadrangle that is a fine divisional region of a three-dimensional model.

By setting a material to the mesh, a drawing process of a three-dimensional image, rendering, is performed. In the case where drawing (rendering) of a three-dimensional image is performed, it is necessary to set an optimum material in a mesh unit.

By setting a material close to an actual material type of the mesh, particularly by setting a texture or a shader, to the mesh that is a component of the three-dimensional model, three-dimensional model data having reality can be generated.

At step S205, the mesh acquisition section 212a first sets a mesh on the three-dimensional model corresponding to the input captured image and the mesh division section 212b executes a mesh division process according to the mask image generated at step S204.

Then at step S206, the model addition section 212c places the three-dimensional model stored in the storage section (DB) 204 on the basis of feature amount information. For example, a process for placing a corneal model forwardly of an eyeball or the like is performed.

It is to be noted that the three-dimensional model is stored in advance in the storage section (DB) 204.

### (Step S207)

Then at step S207, the texture map generation section 213b generates a texture map (base color, shininess, cavity, normal and so forth) necessary for each material in accordance with the customizable template database described with reference to FIGS. 18 and 19.

By utilizing the customizable template database described with reference to FIGS. 18 and 19, optimum material setting in a portion unit can be performed in a short time in a frame unit configuring the imaging object video inputted through the image inputting section 201 and 3D image generation can be executed as real-time processing.

At step S207, a texture that is an element of a material to be set to each mesh of the three-dimensional image to be generated by rendering is determined.

The template database 224 stored in the storage section (DB) 204, namely, correspondence data between the customizable attribute information and the materials, is utilized for the determination process of the texture.

The user input information acquired at step S201 can be applied to the customize information.

For example, in the configuration of the template database 224 depicted in FIG. 18, a texture map is recorded as a material.

In particular, setting of a texture map to be applied in response to customizable attribute information is recorded.

In particular, for example, in the case where such customizable information as a normal skin of a 20 to 35 year old Caucasoid woman is applied, such texture maps corresponding to the customized attribute information as
(a) setting of a texture map to be pasted to a mesh in a region around an eye,
(b) setting of a texture map to be pasted to a mesh in a region of the ridge of the nose,
(c) setting of a texture map to be pasted to a mesh in a region of an eyebrow,
(d) setting of a texture map to be pasted to a mesh in a region of a cheek,
   .....
are registered.

By utilizing this template database, it becomes possible to perform optimum material setting of a portion unit in a short time in a frame unit configuring an imaging object video inputted from the image inputting section, and 3D image generation can be executed as real-time processing.

It is to be noted that, in the case where a process utilizing the template database of the setting depicted in FIG. 18 is to be performed, a texture is acquired from the template database while, for a shader, a calculation process is executed every time in a frame unit to perform a determination process of a drawing color in a pixel unit in a mesh.

As described hereinabove, the template database 224 depicted in FIG. 19 has a texture map and a shader recorded therein as a material.

If the template database of the setting depicted in FIG. 19 is utilized, then it is possible to acquire also information of a shader from the template database together with a texture, and it is possible to determine a texture in a mesh in a frame unit and in a portion unit and a drawing color for each pixel.

### (Step S208)

At step S208, the rendering section 214 executes rendering for applying a material to the 3D model.

In this process, material setting to a mesh of each portion, namely, pasting of the texture, is performed utilizing the texture map ready for the customized attribute information acquired from the template database 224 at step S207. Further, the shader that is a determination algorithm of a drawing color of a pixel unit is applied to perform a determination process of a drawing color in a pixel unit.

### (Step S209)

Finally, at step S209, a rendering result generated at step S208 is displayed by the display section 205.

It is to be noted that the processes at steps S201 to S209 are executed for each image frame inputted by the image inputting section 201.

The processes are executed as real-time processing.

One of great elements that make this real-time processing implementable is a template database.

In particular, by utilizing the template database in which a texture map ready for attribute information, which can be modified or changed (customized) by various user requests, is registered, it becomes possible to perform optimum material setting of an imaging object component unit in a frame unit configuring an imaging object video inputted from the image inputting section 201, and 3D image generation can be executed as real-time processing.

### [6. Example of Hardware Configuration of Image Processing Apparatus]

Now, an example of a hardware configuration of the image processing apparatus 200 depicted in FIG. 6 and the transmission apparatus 110 and the reception apparatus 120 depicted in FIGS. 3 to 5 is described with reference to FIG. 21.

FIG. 21 depicts an example of a hardware configuration of an image processing apparatus 300 that corresponds to the image processing apparatus 200 depicted in FIG. 6 and the transmission apparatus 110 and the reception apparatus 120 depicted in FIGS. 3 to 5.

The image processing apparatus 300 may particularly be an information processing apparatus such as, for example, a PC (Personal computer), a tablet PC, a smartphone or a tablet terminal.

In the figure, the image processing apparatus 100 includes a controller 301, a ROM (Read Only Memory) 302, a RAM (Random Access Memory) 303, an input/output interface 305 and a bus 304 that connect them to each other.

The controller 301 suitably accesses the RAM 303 and so forth as occasion demands and comprehensively controls the entire blocks of the image processing apparatus 300 while performing various arithmetic operation processes. The controller 301 may be a CPU (Central Processing Unit), a GPU (Graphics Processing Unit) or the like. The ROM 302 is a nonvolatile memory in which firmware of an OS to be executed by the controller 301, programs, various parameters and so forth are stored fixedly. The RAM 303 is used as a working area or the like of the controller 301 and temporarily retains the OS, various applications being executed and various data during processing.

To the input/output interface 305, an inputting section 306, an outputting section 307, a storage section 308, a communication section 309, a drive 310 into which a removable medium 311 can be loaded and so forth are connected.

It is to be noted that the input/output interface 105 may be configured for connection not only to the components described above but also to external peripheral equipment through a USB (Universal Serial Bus) terminal, an IEEE terminal or the like.

The inputting section 306 is an inputting section including, for example, the image inputting section 201, user inputting section 202 and so forth of the image processing apparatus 200 depicted in FIG. 6. The imaging inputting section can include, for example, an imaging section or the like.

The inputting section 306, for example, includes a pointing device such as a mouse, a keyboard, a touch panel and other inputting devices.

The outputting section 307 includes the display section 205 of the image processing apparatus 200 depicted in FIG. 6.

The storage section 308 corresponds to the storage section (DB) 204 of the image processing apparatus 200 depicted in FIG. 6. For example, the storage section 308 is a nonvolatile memory such as, for example, an HDD (Hard Disk Drive), a flash memory (SSD; Solid State Drive) or a different solid-state memory. In the storage section 308, an OS, various applications and various data are stored. The storage section 308 is utilized also as a storage area for an input image, image information, generated output images and so forth.

The communication section 309 is an NIC (Network Interface Card), for example, for the Ethernet (registered trademark) and performs communication processing through the network.

The drive 310 is utilized for data recording and reproduction processes utilizing the removable medium 311.

The removable medium 311 includes, for example, a BD, a DVD, a CD, an HDD, a flash memory or the like.

### [7. Summary of Constitution of Present Disclosure]

The working example of the present disclosure has been described in detail with reference to the specific working example. However, it is self-evident that modification or substitution of the working example can be made by those skilled in the art without departing from the subject matter of the present disclosure. In other words, the present invention has been disclosed in the form of exemplification and shall not be interpreted restrictively. In order to decide the subject matter of the present disclosure, the claims should be taken into consideration.

It is to be noted that the technology disclosed in the present specification can assume such a configuration as described below.
(1) An image processing apparatus including:
   an image processing section configured to execute a three-dimensional image generation process based on an input image, in which
   the image processing section refers to a template database that includes correspondence data between attribute information of an imaging object of the input image and a material that is a rendering element of a three-dimensional image to select a material according to an imaging object attribute and executes a generation process of a three-dimensional image.
(2) The image processing apparatus according to (1), in which
   the input image includes moving image data, and
   the image processing section executes a generation process of a new three-dimensional image for each image frame that configures the moving image data.
(3) The image processing apparatus according to (1) or (2), in which
   the input image includes moving image data, and
   the image processing section updates setting of a mesh that is a configuration unit of a three-dimensional image and a material for each image frame configuring the moving image data and executes a generation process for a new three-dimensional image.
(4) The image processing apparatus according to any one of (1) to (3), in which
   the template database includes a database in which a material of a component unit of the imaging object is recorded, and
   the image processing section applies a mask image of the component unit to acquire a material for each component from the template database and executes material setting for the component unit.
(5) The image processing apparatus according to any one of (1) to (4), in which
   the input image includes a face image of a person,
   the template database includes a database in which a material of a component unit of a face of a person included in the input image is recorded, and
   the image processing section applies a mask image of the component unit of the face of the person included in the input image to acquire a material for each component from the template database and executes material setting of the component unit of the face.
(6) The image processing apparatus according to any one of (1) to (5), in which
   the template database includes a texture as the material, and
   the image processing section selects a texture according to an imaging object attribute from the template database and executes a generation process of a three-dimensional image.
(7) The image processing apparatus according to any one of (1) to (6), in which
   the template database includes a texture and a shader as the material, and
   the image processing section selects a texture and a shader according to an imaging object attribute from the template database and executes a generation process of a three-dimensional image.
(8) The image processing apparatus according to any one of (1) to (7), in which
   the image processing section
   includes a feature amount extraction section configured to extract a feature amount from the input image,
   identifies a component of the imaging object on a basis of the feature amount extracted by the feature amount extraction section, and
   performs material setting in a unit of the identified component.
(9) The image processing apparatus according to any one of (1) to (8), in which
   the image processing section
   includes a feature amount extraction section configured to extract a feature amount from the input image,
   identifies a component of the imaging object on a basis of the feature amount extracted by the feature amount extraction section, and
   performs a mask image generation process in a unit of the identified component.
(10) The image processing apparatus according to any one of (1) to (9), in which
   the image processing section includes a mesh division section configured to execute a division process of a mesh that is a material setting unit in accordance with a component of the imaging object.
(11) The image processing apparatus according to any one of (1) to (10), in which
   the attribute information of the imaging object includes at least one of a sex, an age, a race or a skin type.
(12) The image processing apparatus according to any one of (1) to (11), in which
   the attribute information of the imaging object includes attribute information acquired by an analysis process of the input image or attribute information acquired by user inputting.
(13) The image processing apparatus according to any one of (1) to (12), in which
   the correspondence data between the attribute information and the material stored in the template database includes data customizable by a user, and
   the image processing apparatus is configured so as to change the correspondence data between the attribute information and the material in response to input information inputted through a user inputting section.
(14) The image processing apparatus according to any one of (1) to (13), in which
   the input image includes an image received through a network.
(15) An image processing system including:
   a transmission apparatus configured to transmit an image; and
   a reception apparatus configured to execute processing for an input image from the transmission apparatus to generate a three-dimensional image and display the three-dimensional image on a display section, in whihc
   the image processing section of the reception apparatus refers to a template database that includes correspondence data between attribute information of an imaging object of the input image and a material that is a rendering element of a three-dimensional image to select a material according to an imaging object attribute and executes a generation process of the three-dimensional image.
(16) The image processing system according to (15), in which
   the image includes moving image data, and
   the image processing section of the reception apparatus updates setting of a mesh that is a configuration unit of a three-dimensional image and a material for each image frame configuring the moving image data and executes a generation process for a new three-dimensional image.
(17) The image processing system according to (15) or (16), in which
   the template database includes a database in which a material of a component unit of the imaging object is recorded, and
   the image processing section of the reception apparatus applies a mask image of the component unit to acquire a material for each component from the template database and executes material setting for the component unit.
(18) The image processing system according to any one of (15) to (17), in which
   the input image includes a face image of a person,
   the template database includes a database in which a material of a component unit of a face of a person is recorded, and
   the image processing section applies a mask image of the component unit of the face of the person included in the input image to acquire a material for each component from the template database and executes material setting of the component unit of the face.
(19) An image processing method executed by an image processing apparatus, in which
   the image processing apparatus includes an image processing section configured to execute a three-dimensional image generation process based on an input image, and
   the image processing section refers to a template database that includes correspondence data between attribute information of an imaging object of the input image and a material that is a rendering element of a three-dimensional image to select a material according to an imaging object attribute and executes a generation process of a three-dimensional image.
(20) A program for causing an image processing apparatus to execute image processing, in which
   the image processing apparatus includes an image processing section configured to execute a three-dimensional image generation process based on an input image, and
   the program causes the image processing section to refer to a template database that includes correspondence data between attribute information of an imaging object of the input image and a material that is a rendering element of a three-dimensional image to select a material according to an imaging object attribute and execute a generation process of a three-dimensional image.

Further, the series of processes described in the specification can be executed by hardware, software or by a composite configuration of them. In the case where processing by software is executed, it is possible to install a program in which a processing sequence is recorded into a memory in a computer incorporated in hardware for exclusive use so as to be executed or install the program into a computer for universal use that can execute various processes such that the program is executed. For example, the program can be recorded in a recording medium in advance. In addition to installation from a recording medium into a computer, it is possible to receive the program through a network such as a LAN (Local Area Network) or the Internet and install the program into a built-in recording medium such as a hard disk.

It is to be noted that the various processes described in the specification not only may be executed in time series in accordance with the description but also may be executed in parallel or individually in accordance with the processing capacity of an apparatus that executes the processes or as occasion demands. Further, the system in the present specification is a logical set composition of a plurality of apparatuses and is not limited to a configuration in which component apparatuses are in the same housing.

### [Industrial Applicability]

As described above, according to the configuration of the working example of the present disclosure, an apparatus and a method are implemented which make 3D image generation based on an input image on the real-time basis possible.

In particular, for example, processing for image frames of an input image is executed to generate a three-dimensional image. A template database that is correspondence data between attribute information of an imaging object of an input image and materials that are rendering elements of a three-dimensional image is referred to to select a material according to an imaging object attribute to generate a three-dimensional image. The template database has materials of component units of the face of a person recorded therein, and the image processing section applies a mask image for a component unit of the face to acquire a material for each component unit from the template database and executes material setting in a component unit of the face.

By the present constitution, an apparatus and a method are implemented which make 3D image generation based on an input image on the real-time basis possible.

### [Reference Signs List]

110 Transmission apparatus
111 Image acquisition section
113 Three-dimensional model information generation section
114 Transmission information generation section
115 Communication section
120 Reception apparatus
121 Communication section
122 Image processing section
123 Database
124 Display section
200 Image processing apparatus
201 Image inputting section
202 User inputting section
203 Image processing section
204 Storage section
205 Display section
211 Image information analysis section
211a Feature amount extraction section
211b Attribute analysis section
212 Mesh editing section
212a Mesh acquisition section
212b Mesh division section
212c Model addition section
213 Material application section
213a Mask image generation section
213b Texture map generation section
214 Rendering section
222 Mask image
223 Imaging object attribute information
224 Template database
301 Controller
302 ROM
303 RAM
304 Bus
305 Input/output interface
306 Inputting section
307 Outputting section
308 Storage section
309 Communication section
310 Drive
311 Removable medium

## Claims

1. An image processing apparatus comprising:
an image processing section configured to execute a three-dimensional image generation process based on an input image, wherein
the image processing section refers to a template database that includes correspondence data between attribute information of an imaging object of the input image and a material that is a rendering element of a three-dimensional image to select a material according to an imaging object attribute and executes a generation process of a three-dimensional image.

2. The image processing apparatus according to claim 1, wherein
the input image includes moving image data, and
the image processing section executes a generation process of a new three-dimensional image for each image frame that configures the moving image data.

3. The image processing apparatus according to claim 1, wherein
the input image includes moving image data, and
the image processing section updates setting of a mesh that is a configuration unit of a three-dimensional image and a material for each image frame configuring the moving image data and executes a generation process for a new three-dimensional image.

4. The image processing apparatus according to claim 1, wherein
the template database includes a database in which a material of a component unit of the imaging object is recorded, and
the image processing section applies a mask image of the component unit to acquire a material for each component from the template database and executes material setting for the component unit.

5. The image processing apparatus according to claim 1, wherein
the input image includes a face image of a person,
the template database includes a database in which a material of a component unit of a face of a person included in the input image is recorded, and
the image processing section applies a mask image of the component unit of the face of the person included in the input image to acquire a material for each component from the template database and executes material setting of the component unit of the face.

6. The image processing apparatus according to claim 1, wherein
the template database includes a texture as the material, and
the image processing section selects a texture according to an imaging object attribute from the template database and executes a generation process of a three-dimensional image.

7. The image processing apparatus according to claim 1, wherein
the template database includes a texture and a shader as the material, and
the image processing section selects a texture and a shader according to an imaging object attribute from the template database and executes a generation process of a three-dimensional image.

8. The image processing apparatus according to claim 1, wherein
the image processing section
includes a feature amount extraction section configured to extract a feature amount from the input image,
identifies a component of the imaging object on a basis of the feature amount extracted by the feature amount extraction section, and
performs material setting in a unit of the identified component.

9. The image processing apparatus according to claim 1, wherein
the image processing section
includes a feature amount extraction section configured to extract a feature amount from the input image,
identifies a component of the imaging object on a basis of the feature amount extracted by the feature amount extraction section, and
performs a mask image generation process in a unit of the identified component.

10. The image processing apparatus according to claim 1, wherein
the image processing section includes a mesh division section configured to execute a division process of a mesh that is a material setting unit in accordance with a component of the imaging object.

11. The image processing apparatus according to claim 1, wherein
the attribute information of the imaging object includes at least one of a sex, an age, a race or a skin type.

12. The image processing apparatus according to claim 1, wherein
the attribute information of the imaging object includes attribute information acquired by an analysis process of the input image or attribute information acquired by user inputting.

13. The image processing apparatus according to claim 1, wherein
the correspondence data between the attribute information and the material stored in the template database includes data customizable by a user, and
the image processing apparatus is configured so as to change the correspondence data between the attribute information and the material in response to input information inputted through a user inputting section.

14. The image processing apparatus according to claim 1, wherein
the input image includes an image received through a network.

15. An image processing system comprising:
a transmission apparatus configured to transmit an image; and
a reception apparatus configured to execute processing for an input image from the transmission apparatus to generate a three-dimensional image and display the three-dimensional image on a display section, wherein
the image processing section of the reception apparatus refers to a template database that includes correspondence data between attribute information of an imaging object of the input image and a material that is a rendering element of a three-dimensional image to select a material according to an imaging object attribute and executes a generation process of the three-dimensional image.

16. The image processing system according to claim 15, wherein
the image includes moving image data, and
the image processing section of the reception apparatus updates setting of a mesh that is a configuration unit of a three-dimensional image and a material for each image frame configuring the moving image data and executes a generation process for a new three-dimensional image.

17. The image processing system according to claim 15, wherein
the template database includes a database in which a material of a component unit of the imaging object is recorded, and
the image processing section of the reception apparatus applies a mask image of the component unit to acquire a material for each component from the template database and executes material setting for the component unit.

18. The image processing system according to claim 15, wherein
the input image includes a face image of a person,
the template database includes a database in which a material of a component unit of a face of a person is recorded, and
the image processing section applies a mask image of the component unit of the face of the person included in the input image to acquire a material for each component from the template database and executes material setting of the component unit of the face.

19. An image processing method executed by an image processing apparatus, wherein
the image processing apparatus includes an image processing section configured to execute a three-dimensional image generation process based on an input image, and
the image processing section refers to a template database that includes correspondence data between attribute information of an imaging object of the input image and a material that is a rendering element of a three-dimensional image to select a material according to an imaging object attribute and executes a generation process of a three-dimensional image.

20. A program for causing an image processing apparatus to execute image processing, wherein
the image processing apparatus includes an image processing section configured to execute a three-dimensional image generation process based on an input image, and
the program causes the image processing section to refer to a template database that includes correspondence data between attribute information of an imaging object of the input image and a material that is a rendering element of a three-dimensional image to select a material according to an imaging object attribute and execute a generation process of a three-dimensional image.
